# EUROPEAN PATENT SPECIFICATION

(11) **EP 3 660 462 B1**
(45) Date of publication and mention of the grant of the patent: **30.12.2020**
(21) Application number: 18209295.7
(22) Date of filing: 29.11.2018
(51) Int. Cl.: G01D 3/036, G01B 7/06, G01D 5/20, G01D 5/24

(54) **APPARATUS FOR MEASURING A PHYSICAL PARAMETER AND METHOD OF OPERATING SUCH APPARATUS**
VORRICHTUNG ZUR MESSUNG EINES PHYSIKALISCHEN PARAMETERS UND VERFAHREN ZUM BETRIEB SOLCH EINER VORRICHTUNG
APPAREIL DE MESURE D'UN PARAMÈTRE PHYSIQUE ET PROCÉDÉ DE FONCTIONNEMENT D'UN TEL APPAREIL

(43) Date of publication of application: 03.06.2020
(73) Proprietor: Helmut Fischer GmbH Institut für Elektronik und Messtechnik., 71069 Sindelfingen (DE)
(72) Inventor: Czempas, Dominic, 76133 Karlsruhe (DE)
(74) Representative: DREISS Patentanwälte PartG mbB

(56) References cited:
- US-A- 4 716 397
- US-A- 5 134 386
- US-A1- 2010 066 347
- US-A1- 2012 085 176

## Description

### Field of the invention

The disclosure relates to an apparatus for measuring a physical parameter comprising a series connection of at least a first impedance and a second impedance, wherein said first impedance has a first terminal and a second terminal, wherein an impedance value of at least said first impedance depends on said physical parameter, wherein said second impedance has a first terminal and a second terminal, and wherein said second terminal of said first impedance is connected to said first terminal of said second impedance forming a first node.

The disclosure further relates to a method of operating such apparatus.

### Background

Conventional apparatus and methods of the abovementioned type may be used for measuring a physical parameter, for example by evaluating a signal that can be obtained at said first node. A change of said physical parameter usually leads to a change of the impedance value of at least said first impedance, which can be detected by said evaluation. The conventional approaches lack operational flexibility because measurements can only be performed at a single frequency. Also, a precise evaluation of said signal is complex and costly for high frequencies since components with a comparatively high bandwidth of operation are required.

US 2012/085176 A1 discloses an analog strain gauge conditioning system for space environment.

### Summary

In view of this, some embodiments provide an improved apparatus for measuring a physical parameter comprising a series connection of at least a first impedance and a second impedance, wherein said first impedance has a first terminal and a second terminal, wherein an impedance value of at least said first impedance depends on said physical parameter, wherein said second impedance has a first terminal and a second terminal, and wherein said second terminal of said first impedance is connected to said first terminal of said second impedance forming a first node, wherein said apparatus further comprises a signal generator configured to apply a first amplitude modulated signal to said first terminal of said first impedance and a second amplitude modulated signal to said second terminal of said second impedance, said apparatus further comprising an evaluation device configured to receive a first measurement signal from said first node and to determine information on said at least one physical parameter depending on said first measurement signal. This approach increases operational flexibility and enables to perform measurements with comparatively high frequencies. At the same time, for said evaluation, components with a comparatively high bandwidth of operation, e.g. corresponding to the frequency range in which measurements are performed, are not required. The first impedance and the second impedance are electric impedances.

According to preferred embodiments, the first amplitude modulated signal and the second amplitude modulated signal comprise the same carrier frequency, which further reduces complexity as e.g. a single signal source may be used for providing a carrier signal having said carrier frequency.

According to further preferred embodiments, the first impedance and the second impedance may comprise at least one inductive element each, for example a coil. According to further preferred embodiments, the first impedance and the second impedance may also comprise at least one capacitive or resistive element each, or any other type of electrical element an impedance value of which may depend on a physical parameter, e.g. of an object to be measured (e.g. an optical sensor). As an example, if the first impedance and the second impedance comprise at least one inductive element (e.g., a coil) each, the presence or absence of an electrically conductive element at a position close to at least the first impedance may be detected. Also, by evaluating said first measurement signal, more detailed information may be determined, such as e.g. a thickness of an electrically conductive layer present on an object which is close to the first impedance.

According to further preferred embodiments, the signal generator is configured to selectively provide the first amplitude modulated signal and the second amplitude modulated signal with a predetermined carrier frequency. While for both the first amplitude modulated signal and the second amplitude modulated signal preferably said (same) carrier frequency is used, according to further preferred embodiments, this carrier frequency may be varied arbitrarily, which enables to perform measurements at respective different frequencies. This way, e.g. when using inductive elements as said first impedance and said second impedance, measurements in different depths of an object to be measured may be made, as the skin depth is dependent on frequency.

According to further preferred embodiments, the signal generator is configured to sweep the carrier frequency, so that measurements may be made within a predetermined frequency range that is covered by said sweep.

According to further preferred embodiments, said signal generator is configured to at least temporarily obtain said first amplitude modulated signal by multiplying a first carrier signal having a or said carrier frequency with a periodic first control signal and/or to at least temporarily obtain said second amplitude modulated signal by multiplying a second carrier signal having said (same) carrier frequency with a periodic second control signal, wherein preferably said second carrier signal has a predetermined first phase shift with respect to said first carrier signal, wherein preferably said second control signal has a predetermined second phase shift with respect to said first control signal. This enables a particularly efficient evaluation of said first measurement signal.

According to further preferred embodiments, said first phase shift and/or said second phase shift is 90 degrees or a multiple of 90 degrees.

As mentioned above, the signal generator is configured to at least temporarily obtain said first amplitude modulated signal and said second amplitude modulated signal in the way explained above. For instance, in a first mode of operation, the first amplitude modulated signal and said second amplitude modulated signal may be obtained as explained above, while in a second mode of operation, the first amplitude modulated signal and said second amplitude modulated signal may be obtained in a different way, e.g. according to further embodiments as exemplarily disclosed in the following paragraphs.

According to further preferred embodiments, said signal generator is configured to at least temporarily obtain said first amplitude modulated signal by adding a third carrier signal having a or said carrier frequency with a periodic third control signal and/or to at least temporarily obtain said second amplitude modulated signal by adding a fourth carrier signal having said carrier frequency with a periodic fourth control signal, wherein preferably said fourth carrier signal has a predetermined third phase shift with respect to said third carrier signal, and wherein preferably said fourth control signal has a predetermined fourth phase shift with respect to said third control signal.

According to further preferred embodiments, said third phase shift is 180 degrees, wherein preferably said fourth phase shift is zero.

According to further preferred embodiments, said evaluation device comprises an envelope demodulator and/or a bandpass filter and/or a high-pass filter for processing said first measurement signal, whereby a first processed signal is obtained.

According to further preferred embodiments, said evaluation device comprises a control circuit for providing a compensation signal, wherein said compensation signal is determined such that a sum of said first processed signal and said compensation signal is zero. According to further preferred embodiments, said control circuit may comprise a closed-loop control configured to receive said sum of said first processed signal and said compensation signal and configured to influence said compensation signal depending on said sum signal. Advantageously, said closed-loop control inter alia contributes to providing a temperature-independent, stable evaluation with high precision.

Further preferred embodiments relate to a method of operating an apparatus for measuring a physical parameter, said apparatus comprising a series connection of at least a first impedance and a second impedance, wherein said first impedance has a first terminal and a second terminal, wherein an impedance value of at least said first impedance depends on said physical parameter, wherein said second impedance has a first terminal and a second terminal, and wherein said second terminal of said first impedance is connected to said first terminal of said second impedance forming a first node, wherein said method comprises the following steps: applying, by means of a signal generator, a first amplitude modulated signal to said first terminal of said first impedance and a second amplitude modulated signal to said second terminal of said second impedance, receiving, by an evaluation device, a first measurement signal from said first node, and determining information on said at least one physical parameter depending on said first measurement signal.

According to further preferred embodiments, the first amplitude modulated signal and the second amplitude modulated signal comprise the same carrier frequency.

According to further preferred embodiments, the signal generator selectively provides the first amplitude modulated signal and the second amplitude modulated signal with a predetermined carrier frequency, wherein preferably the signal generator sweeps the carrier frequency.

According to further preferred embodiments, said signal generator at least temporarily obtains said first amplitude modulated signal by multiplying a first carrier signal having a or said carrier frequency with a periodic first control signal and at least temporarily obtains said second amplitude modulated signal by multiplying a second carrier signal having said carrier frequency with a periodic second control signal, wherein said second carrier signal has a predetermined first phase shift with respect to said first carrier signal, and wherein said second control signal has a predetermined second phase shift with respect to said first control signal.

According to further preferred embodiments, said first phase shift and/or said second phase shift is 90 degrees or a multiple of 90 degrees.

According to further preferred embodiments, said signal generator at least temporarily obtains said first amplitude modulated signal by adding a third carrier signal having a or said carrier frequency with a periodic third control signal and at least temporarily obtains said second amplitude modulated signal by adding a fourth carrier signal having said carrier frequency with a periodic fourth control signal, wherein said fourth carrier signal has a predetermined third phase shift with respect to said third carrier signal, and wherein said fourth control signal has a predetermined fourth phase shift with respect to said third control signal.

According to further preferred embodiments, said third phase shift is 180 degrees, and said fourth phase shift is zero.

According to further preferred embodiments, said evaluation device processes said first measurement signal by means of an envelope demodulator and/or a bandpass filter and/or a high-pass filter, whereby a first processed signal is obtained.

According to further preferred embodiments, said evaluation device provides, by means of a control circuit, a compensation signal, wherein said compensation signal is determined such that a sum of said first processed signal and said compensation signal is zero.

According to further preferred embodiments, said steps of applying, receiving, and determining are repeated for a predetermined number of measurements, wherein for each of said predetermined number of measurements a different carrier frequency is used. This way, the principle according to the embodiments may be employed for a predetermined number or range of carrier frequencies, whereby detailed information on said physical parameter may be obtained.

### Brief description of the figures

Further features, aspects and advantages of the embodiments are given in the following detailed description with reference to the drawings in which:
- Figure 1: schematically depicts a simplified block diagram of an apparatus according to an embodiment,
- Figure 2: schematically depicts a simplified flow-chart of a method according to an embodiment,
- Figure 3: schematically depicts aspects of a signal generator according to an embodiment,
- Figure 4: schematically depicts aspects of a signal generator according to a further embodiment,
- Figure 5: schematically depicts a simplified block diagram of a signal generator according to a further embodiment,
- Figure 6: schematically depicts a simplified block diagram of an evaluation device according to a further embodiment,
- Figure 7: schematically depicts amplitude modulated signals according to an embodiment,
- Figure 8: schematically depicts a detail view of Figure 7,
- Figure 9A, 9B, 9C: each schematically depict a measurement signal according to an embodiment,
- Figure 10A, 10B, 10C: each schematically depict a processed measurement signal derived from the respective measurement signal of Fig. 9A, 9B, 9C according to further embodiments,
- Figure 11A: schematically depicts frequency ranges according to further embodiments,
- Figure 11B, 11C: each schematically depict a spectral plot of a signal according to further embodiments,
- Figure 12: schematically depicts a simplified block diagram of an apparatus according to a further embodiment,
- Figure 13: schematically depicts a simplified block diagram of a signal generator according to a further embodiment,
- Figure 14: schematically depicts a simplified block diagram of an apparatus according to a further embodiment,
- Figure 15A, 15B: each schematically depict measurement signals according to further embodiments,
- Figure 16: schematically depicts frequency ranges according to further embodiments,
- Figure 17: schematically depicts a state diagram according to further embodiments,
- Figure 18: schematically depicts frequency ranges according to further embodiments,
and
- Figure 19: schematically depicts a simplified block diagram of an apparatus according to an example.

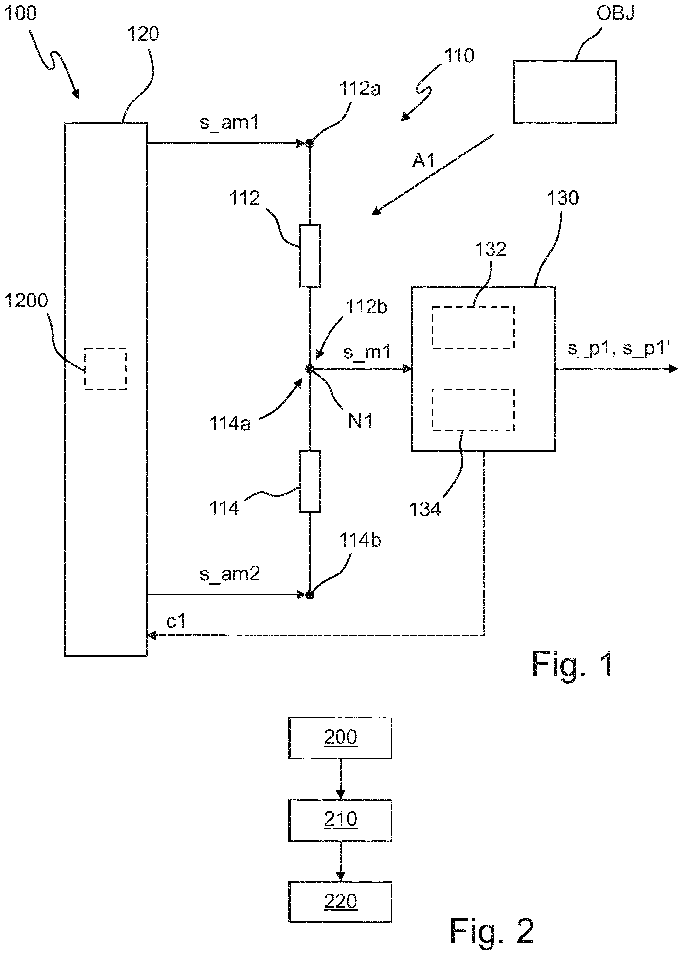

Figure 1 schematically depicts a simplified block diagram of an apparatus 100 according to an embodiment. The apparatus 100 comprises a series connection 110 of at least a first impedance 112 and a second impedance 114, wherein said first impedance 112 has a first terminal 112a and a second terminal 112b, wherein an impedance value of at least said first impedance 112 depends on a physical parameter to be measured, wherein said second impedance 114 has a first terminal 114a and a second terminal 114b, and wherein said second terminal 112b of said first impedance 112 is connected to said first terminal 114a of said second impedance 114 forming a first node N1. In other words, the connection of the terminals 112b, 114a defines said first node N1. According to some embodiments, the first impedance 112 may also be denoted as "measurement sensor" (as its impedance value depends on said physical parameter). According to further embodiments, the second impedance 114 may also be denoted as "reference "sensor"" (as its impedance value does preferably not depend on said physical parameter (or at least does it not depend on said physical parameter in the same way as the impedance value of the first impedance 112 does).

The apparatus 100 further comprises a signal generator 120 configured to apply a first amplitude modulated signal s_am1 to said first terminal 112a of said first impedance 112 and a second amplitude modulated signal s_am2 to said second terminal 114b of said second impedance 114. According to particularly preferred embodiments, the first amplitude modulated signal s_am1 and the second amplitude modulated signal s_am2 comprise the same carrier frequency, which reduces complexity as - according to further embodiments - e.g. a single signal source may be used for providing a carrier signal having said carrier frequency. Also, this way, a null signal (in a tuned state) may be attained at said first node N1, as further explained below.

Further, said apparatus 100 comprises an evaluation device 130 configured to receive a first measurement signal s_m1 from said first node N1 and to determine information on said at least one physical parameter depending on said first measurement signal s_m1.

According to further preferred embodiments, said evaluation device 130 comprises an envelope demodulator 132 and/or a bandpass filter 134 and/or a high-pass filter (not shown in Fig. 1) for processing said first measurement signal s_m1, whereby a first processed signal s_p1, s_p1' is obtained.

Optionally, the evaluation device 130 may be configured to provide at least one control signal c1 for influencing an operation of the signal generator 120 or at least one component of said signal generator 120. As an example, the control signal c1 may be used to control at least one signal property (e.g., amplitude and/or carrier frequency and/or modulation scheme) of at least one of the first amplitude modulated signal s_am1 and the second amplitude modulated signal s_am2.

According to further preferred embodiments, the first impedance 112 and the second impedance 114 may comprise at least one inductive element each, for example a coil. According to further preferred embodiments, the first impedance 112 and the second impedance 114 may also comprise at least one capacitive or resistive element each, or any other type of electrical element an impedance value of which may depend on a physical parameter, e.g. of an object OBJ to be measured, or any combination of various elements. As an example, if the first impedance 112 and the second impedance 114 comprise at least one inductive element (e.g., a coil) each, the presence or absence of an electrically conductive element (e.g., a solid electrically conductive element or an electrically conductive layer covering a surface of a non-conductive body or substrate), cf. the object OBJ, at a position close to at least the first impedance 112 may be detected. Also, by evaluating said first measurement signal s_m1, more detailed information may be determined, such as e.g. a thickness of an electrically conductive layer present on an object OBJ which is close to the first impedance 112, cf. arrow A1.

Figure 2 schematically depicts a simplified flow-chart of a method according to an embodiment, said method comprising the following steps: applying 200, by means of said signal generator 120 (Fig. 1), a first amplitude modulated signal s_am1 to said first terminal 112a of said first impedance 112 and a second amplitude modulated signal s_am2 to said second terminal 114b of said second impedance 114, receiving 210 (Fig. 2), by said evaluation device 130, the first measurement signal s_m1 (Fig. 1) from said first node N1, and determining 220 (Fig. 2) information on said at least one physical parameter depending on said first measurement signal s_m1.

According to further preferred embodiments, said steps of applying 200, receiving 210, and determining 220 may be repeated for a predetermined number of times or measurements and/or for a predetermined amount of time, wherein for each of said predetermined number of times or measurements a same or a different carrier frequency may be used. According to particularly preferred embodiments, the principle according to the embodiments may be employed for a predetermined number or range of carrier frequencies, whereby detailed information on said physical parameter of the object OBJ may be obtained. Exemplary embodiments illustrating measurements with different carrier frequencies are provided further below.

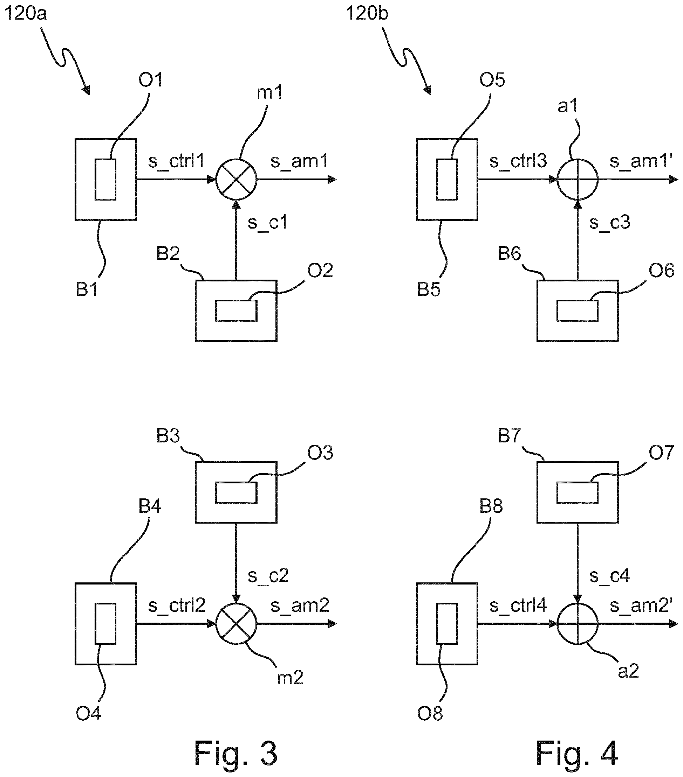

Figures 3, 4 schematically depict aspects of signal generators 120a, 120b according to further embodiments. As an example, signal generator 120 of Fig. 1 may comprise a configuration identical or at least similar to the configuration of Fig. 3 and/or the configuration of Fig. 4.

The signal generator 120a of Fig. 3 is configured to provide said first amplitude modulated signal s_am1 by multiplying via a multiplier m1 a first carrier signal s_c1 having a carrier frequency with a periodic first control signal s_ctrl1. According to further embodiments, said first control signal s_ctrl1 is provided by a block B1, which may e.g. comprise a first oscillator O1 that provides a sinusoidal output signal representing said first control signal s_ctrl1. According to further embodiments, said first carrier signal s_c1 is provided by a block B2, which may e.g. comprise a second oscillator O2 that provides a sinusoidal output signal representing said first carrier signal s_c1.

Similarly, the signal generator 120a of Fig. 3 is further configured to provide said second amplitude modulated signal s_am2 by multiplying, via a multiplier m2, a second carrier signal s_c2 having said (same) carrier frequency as the first carrier signal s_c1 with a periodic second control signal s_ctrl2. According to further embodiments, said second carrier signal s_c2 is provided by a block B3, which may e.g. comprise a third oscillator O3 that provides a sinusoidal output signal representing said second carrier signal s_c2. According to further embodiments, said second control signal s_ctrl2 is provided by a block B4, which may e.g. comprise a fourth oscillator O4 that provides a sinusoidal output signal representing said second control signal s_ctrl2.

According to further embodiments, the block B1 may be configured to generate a periodic non-sinusoidal signal such as e.g. a square wave signal (rectangular signal) and to derive a sinusoidal signal from said periodic non-sinusoidal signal, which sinusoidal signal may form the first control signal s_ctrl1. According to further embodiments, this may also apply to any or a plurality of the blocks B2, B3, B4.

According to further embodiments, the block B1 may also be configured to receive a periodic non-sinusoidal signal such as e.g. a square wave signal (rectangular signal) from another component, e.g. from the evaluation device 130 (Fig. 1), cf. reference sign c1, and to derive said first control signal s_ctrl1 from said received periodic non-sinusoidal signal. According to further embodiments, this may also apply to any or a plurality of the blocks B2, B3, B4.

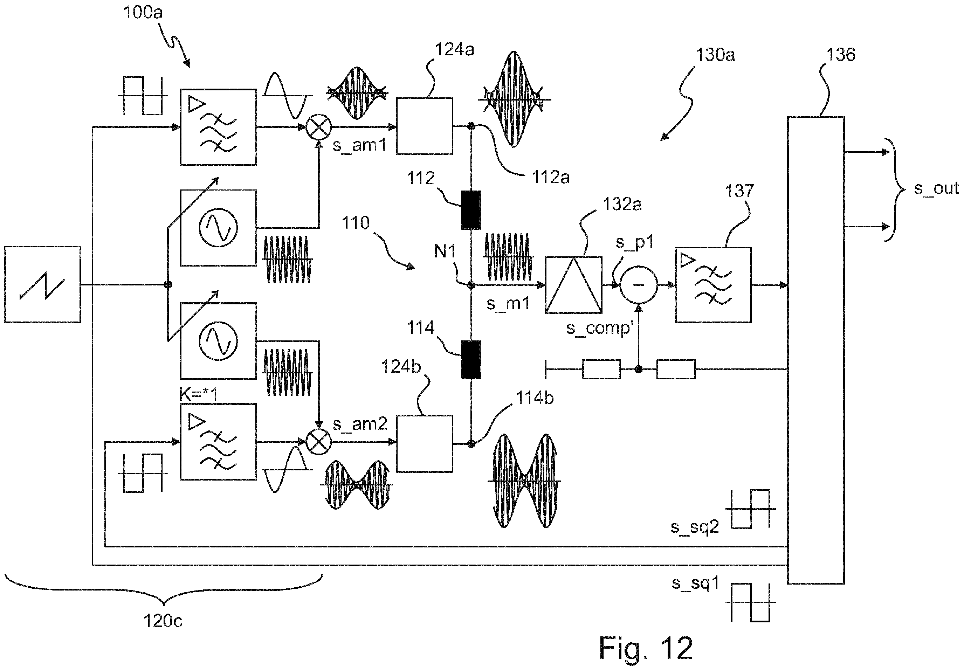

According to further embodiments, said second carrier signal s_c2 has a predetermined first phase shift with respect to said first carrier signal s_c1, wherein preferably said second control signal s_ctrl2 has a predetermined second phase shift with respect to said first control signal s_ctrl1. This enables a particularly efficient evaluation of said first measurement signal s_m1, as explained further below, e.g. with reference to Fig. 12.

According to further preferred embodiments, said first phase shift and/or said second phase shift is 90 degrees or a multiple of 90 degrees. This way, according to further embodiments, in the absence of an object OBJ (Fig. 1) to be measured, a null signal may be obtained at the first node N1, said null signal comprising a sinusoidal signal shape with a frequency of the carrier signals, e.g. without modulation components, which, according to further embodiments, may be demodulated using e.g. an envelope demodulation, which leads to a further null signal, i.e. without carrier signal or carrier frequency components.

As an example, if an object OBJ comprising diamagnetic material is moved into the proximity of the first impedance 112, cf. arrow A1 of Fig. 1, the aforementioned null signal at the first node N1 is detuned, e.g. it changes to a non-vanishing amplitude-modulated signal, corresponding to the frequency of the control signals and the properties of the object OBJ. This effect also concerns the (envelope-) demodulated signal using the optional envelope demodulator, so that the information related to the object OBJ is also comprised in the (envelope-)demodulated signal, where it can efficiently be evaluated. In other words, e.g. a detuning of the null signal at the first node N1, for example regarding its amplitude (based on the fact that an impedance value of the first impedance depends on said physical parameter to be measured), may also be observed in the form of a correspondingly detuned (envelope-)demodulated signal (which is e.g. also detuned regarding its amplitude, but not regarding its phase).

As a further example, if an object OBJ comprising ferrous material is moved into the proximity of the first impedance 112, the aforementioned null signal at the first node N1 is also detuned, however primarily regarding its phase, e.g. it changes to a non-vanishing amplitude-modulated signal, corresponding to the frequency of the control signals and the properties of the object OBJ. This effect also concerns the (envelope-) demodulated signal using the optional envelope demodulator, so that the information related to the object OBJ is also comprised in the (envelope-)demodulated signal, where it can efficiently be evaluated. In other words, e.g. a detuning of the null signal at the first node N1, for example regarding its phase (based on the fact that an impedance value of the first impedance depends on said physical parameter to be measured), may also be observed in the form of a correspondingly detuned (envelope-)demodulated signal (which is e.g. also detuned regarding its phase).

To summarize, according to preferred embodiments, a detuning of the series connection 110 may generally lead to a detuned state that is characterized by a nonvanishing amplitude modulated signal or sum signal in the form of the first measurement signal s_m1 at the first node N1, instead of a null signal e.g. merely comprising carrier frequency components. In the detuned state, an amplitude and/or phase of the first measurement signal s_m1 at the first node N1 comprises information related to the object OBJ to be measured, which information may be transformed into the demodulated or processed signal s_p1, s_p1' for (further) evaluation.

According to further preferred embodiments, no specific phase and/or amplitude relation between any of the carrier signals s_c1, s_c2 and any of the control signals s_ctrl1, s_ctrl2 is required. In other words, according to further preferred embodiments, an amplitude and/or phase of the control signals s_ctrl1, s_ctrl2 may be chosen independently of an amplitude and/or phase of the carrier signals s_c1, s_c2.

Turning to Figure 4, the signal generator 120b is configured to provide a first amplitude modulated signal s_am1' by adding, via an adder a1, a third carrier signal s_c3 with a periodic third control signal s_ctrl3. According to further embodiments, said third control signal s_ctrl3 is provided by a block B5, which may e.g. comprise a fifth oscillator O5 that provides a sinusoidal output signal representing said third control signal s_ctrl3. According to further embodiments, said third carrier signal s_c3 is provided by a block B6, which may e.g. comprise a sixth oscillator O6 that provides a sinusoidal output signal representing said third carrier signal s_c3.

Similarly, the signal generator 120b of Fig. 4 is further configured to provide a second amplitude modulated signal s_am2' by adding, via an adder a2, a fourth carrier signal s_c4 having said carrier frequency with a periodic fourth control signal s_ctrl4. According to further embodiments, said fourth carrier signal s_c4 is provided by a block B7, which may e.g. comprise a seventh oscillator O7 that provides a sinusoidal output signal representing said fourth carrier signal s_c4. According to further embodiments, said fourth control signal s_ctrl4 is provided by a block B8, which may e.g. comprise an eighth oscillator O8 that provides a sinusoidal output signal representing said fourth control signal s_ctrl4.

Preferably, said fourth carrier signal s_c4 has a predetermined third phase shift with respect to said third carrier signal s_c3, wherein preferably said fourth control signal s_ctrl4 has a predetermined fourth phase shift with respect to said third control signal s_ctrl3. According to further preferred embodiments, said third phase shift is 180 degrees, wherein preferably said fourth phase shift is zero. This way, according to further embodiments, as far as the control signals s_ctrl3, s_ctrl4 are concerned, the series connection 110 or its impedances 112, 114 are provided with a common mode signal leading to a vanishing voltage difference (as far as the control signals s_ctrl3, s_ctrl4 are concerned) and correspondingly vanishing current through said impedances 112, 114, and thus, in the case of inductive elements 112, 114, no generation of a magnetic field (based on said control signals). It is emphasized that this applies to the signal components of the first measurement signal s_m1 based on the common mode control signals s_ctrl3, s_ctrl4. By contrast, according to further preferred embodiments, the carrier signals are preferably provided in a push-pull-mode of operation, e.g. with the third phase shift being 180 degrees, thus effecting a magnetic field (based on said carrier signals) and enabling measurements related to the object OBJ.

According to further preferred embodiments, no specific phase and/or amplitude relation between any of the carrier signals s_c3, s_c4 and any of the control signals s_ctrl3, s_ctrl4 is required. In other words, according to further preferred embodiments, an amplitude and/or phase of the control signals s_ctrl3, s_ctrl4 may be chosen independently of an amplitude and/or phase of the carrier signals s_c3, s_c4.

According to further preferred embodiments, the signal generator 120 of Fig. 1 is configured to at least temporarily provide amplitude modulated signals s_am1, s_am2 according to the configuration 120a explained above with reference to Fig. 3, and to at least temporarily provide amplitude modulated signals s_am1', s_am2' according to the configuration 120b explained above with reference to Fig. 4.

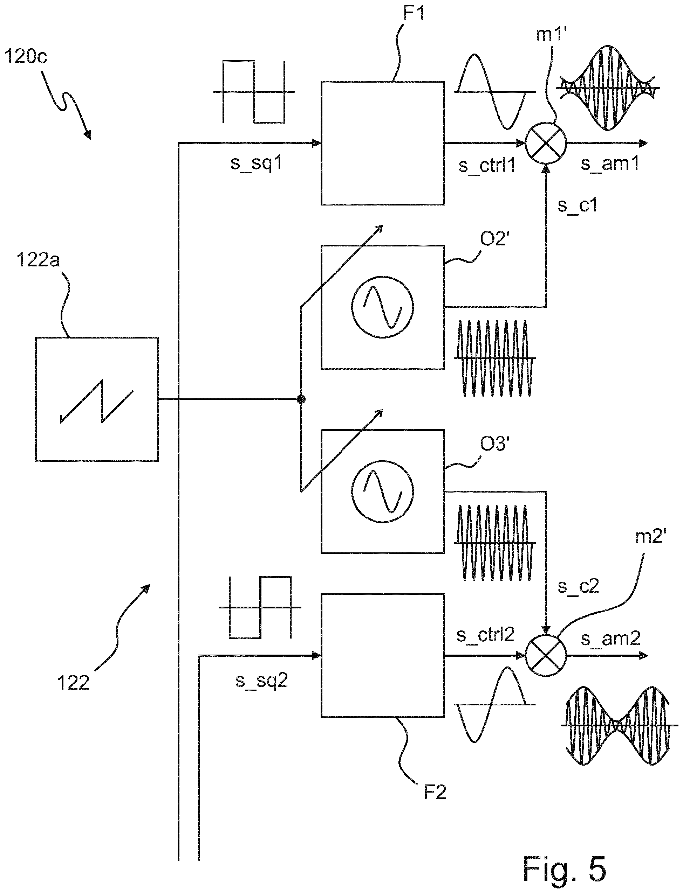

Figure 5 schematically depicts a simplified block diagram of a signal generator 120c according to a further embodiment. Similar to the signal generator 120a explained above with reference to Fig. 3, the signal generator 120c of Fig. 5 provides amplitude modulated signals s_am1, s_am2 which are obtained by multiplying respective carrier signals s_c1, sc2 with respective control signals s_ctrl1, s_ctrl2 each by means of the multipliers m1', m2'. According to the present embodiment, the first control signal s_ctrl1, which is preferably a sinusoidal signal, is derived from a first square wave signal s_sq1 by means of a first filter F1, preferably a bandpass filter, and the second control signal s_ctrl2, which is preferably also a sinusoidal signal, is derived from a second square wave signal s_sq2 by means of a second filter F2, preferably also a bandpass filter.

According to further preferred embodiments, the square wave signals s_sq1, s_sq2 comprise a relative phase shift of 180 degrees, and the filters F1, F2 are configured such that they have the same frequency characteristic and that they preserve said relative phase shift of 180° of the square wave signals s_sq1, s_sq2. In other words, the sinusoidal control signals s_ctrl1, s_ctrl2 obtained by said filters F1, F2 comprise the same frequency and the desired phase shift of presently 180 degrees.

According to further preferred embodiments, the carrier signals s_c1, s_c2 may be provided by a sweep generator arrangement 122 comprising controllable oscillators O2', O3' that provide a preferably sinusoidal output signal each in form of the carrier signals s_c1, s_c2 under control of a sawtooth generator 122a. Similar to the configuration 120a of Fig. 3, the carrier signals s_c1, s_c2 of the oscillators O2', O3' according to Fig. 5 have a predetermined relative first phase shift, said first phase shift preferably being 90 degrees or a multiple of 90 degrees.

According to further preferred embodiments, the square wave signals s_sq1, s_sq2 may be provided by the evaluation device 130, cf. Fig. 1, also cf. reference numeral c1 of Fig. 1.

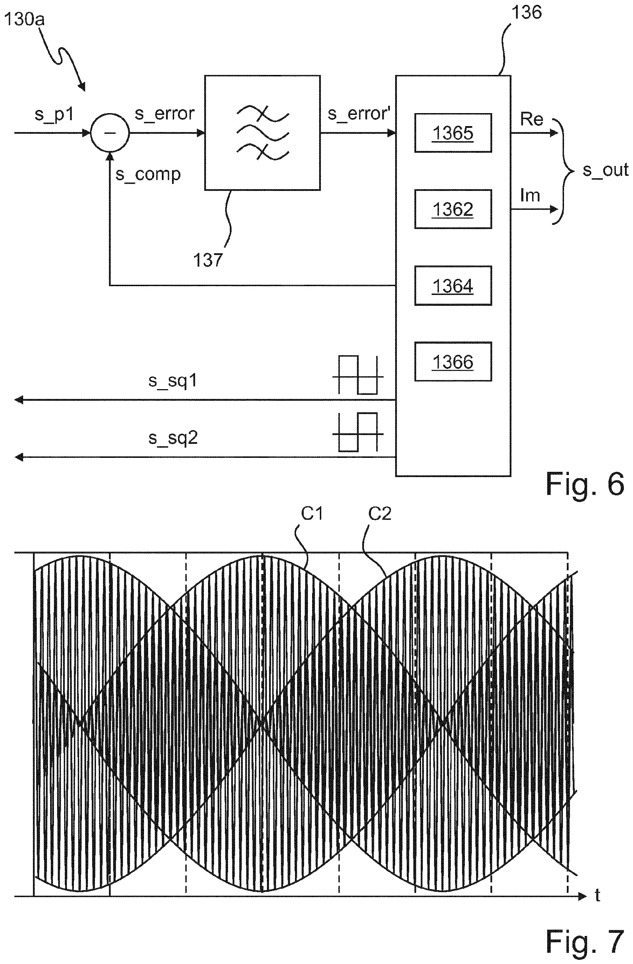

Figure 6 schematically depicts a simplified block diagram of an evaluation device 130a according to a further embodiment. The evaluation device 130a comprises a control circuit 136 for providing a compensation signal s_comp, wherein said compensation signal s_comp is determined such that a sum of said first processed signal s_p1 and said compensation signal s_comp, also termed as error signal s_error, is zero. According to further preferred embodiments, said control circuit 136 may comprise a closed-loop control which is configured to receive said error signal s_error and which may be configured to influence said compensation signal s_comp to minimize said error signal s_error. According to further preferred embodiments, said control circuit 136 may output an output signal s_out, which is preferably a complex signal that may e.g. be represented by a real part Re and an imaginary part Im. Advantageously, the output signal s_out may correspond with said compensation signal s_comp or may be derived from said compensation signal s_comp. This way, said output signal s_out comprises information on an amplitude and/or phase of said compensation signal s_comp required for minimizing the error signal s_error, and thus information on a detuned state of the series connection 110 (Fig. 1), which characterizes the physical parameter of the object OBJ to be measured.

As can be seen from Fig. 6, optionally, the evaluation device 130a may comprise a combined filter and amplifier unit 137 for filtering and/or amplifying the error signal s_error, to obtain a processed error signal s_error'.

According to further embodiments, the output signal s_out can be used to derive information on the physical parameter to be measured by the apparatus 100 according to the embodiments. Preferably, for a further evaluation, the output signal s_out is considered in combination with a frequency of said carrier signals s_c1, s_c2 (or s_c3, s_c4).

According to further preferred embodiments, said control circuit 136 may also be configured to provide the square wave signals s_sq1, s_sq2 for the signal generator 120c as explained above with reference to Fig. 5.

According to further preferred embodiments, said control circuit 136 may comprise a calculating unit 1362, a memory unit 1364 that comprises volatile memory and/or non-volatile memory, for example a random-access memory (RAM) and a Flash-EEPROM. The calculating unit 1362 may be configured to control an operation of the control circuit 136 such as providing the compensation signal s_comp and/or the square wave signals s_sq1, s_sq2 for the signal generator 120c, and/or the output signal s_out. According to further preferred embodiments, said control circuit 136 comprises an analog-to-digital converter (ADC) 1365, e.g. for transforming the error signal s_error or the processed error signal s_error', respectively, from the analog domain to the digital domain. For this, an arbitrary precision or resolution may be used, e.g. depending on an intended field of application. According to some embodiments, a resolution of 8 bit may be used. However, according to further embodiments, a resolution of e.g. 12 bit or 18 bit may be used (higher resolution such as e.g. 24 bit or more is also possible according to further embodiments). According to further preferred embodiments, said control circuit 136 further comprises a digital-to-analog (DAC) converter 1366, e.g. for providing the analog compensation signal s_comp. The abovementioned comments regarding precision also apply to the DAC 1366. According to further embodiments, at least one of the devices 1362, 1364, 1365, 1366 may be implemented in form of a microcontroller and/or a microprocessor and/or a digital signal processor (DSP) and/or a programmable logic device such as a field programmable gate array (FPGA) and/or an application specific integrated circuit.

Similarly, according to further embodiments, at least some components of any of the signal generators 120, 120a, 120b, 120c and/or a source of said square wave signals s_sq1, s_sq2 may be implemented by using hardware and/or software and/or any combination thereof. As an example, in some embodiments, the signal generators 120, 120a, 120b, 120c may be, preferably completely, implemented using hardware. According to further embodiments, the signal generators 120, 120a, 120b, 120c may be at least partly implemented in form of software, e.g. in form of a computer program, which for example is executed by the calculating unit 1362.

According to further particularly preferred embodiments, the signal generators 120, 120a, 120b, 120c are implemented by using dedicated hardware for direct digital synthesis (DDS) of the various signals s_am1, s_am2, s_am1', s_am2' and/or any signals the signals s_am1, s_am2, s_am1', s_am2' are derived from.

Optionally, according to further embodiments, any of the signals s_am1, s_am2, s_am1', s_am2' may be amplified prior to providing it - or its amplified version, respectively, to the terminals 112a and/or 114b (Fig. 1) of the series connection 110. Evidently, this optional amplification may be applied to any of the signals s_am1, s_am2, s_am1', s_am2' independent of how they have been generated.

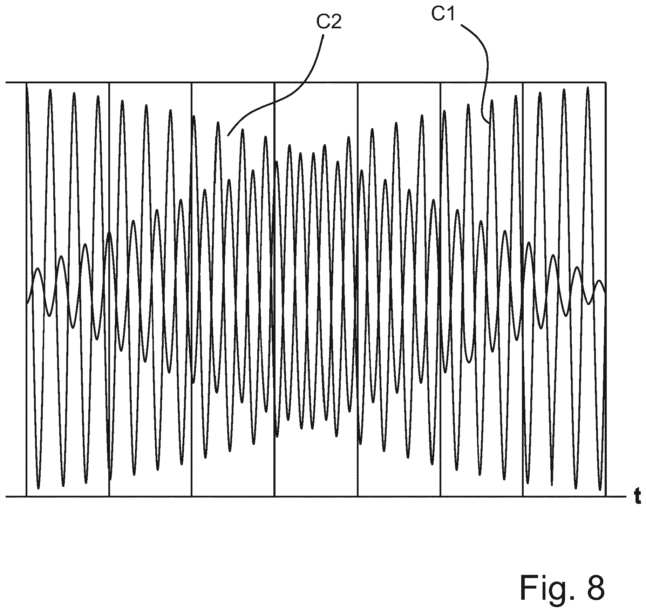

Figure 7 schematically depicts a plot of amplitude modulated signals over time t according to an embodiment, and Figure 8 schematically depicts a detail view of Figure 7. Curve C1 corresponds with the first amplitude modulated signal s_am1, and curve C2 corresponds with the second amplitude modulated signal s_am2. The signals s_am1, s_am2 or the corresponding curves C1, C2 may e.g. be obtained by using the signal generator 120a of Fig. 3. As can be seen from Fig. 7, 8, a phase shift between the control signals ("information signals", corresponding to envelopes of the curves C1, C2), which are modulated onto the respective carrier signals s_c1, s_c2 (Fig. 3), is 90 degrees. In the detail view of Fig. 8, the phase shift between the carrier signals s_c1, s_c2 can be seen, which is presently also 90 degrees.

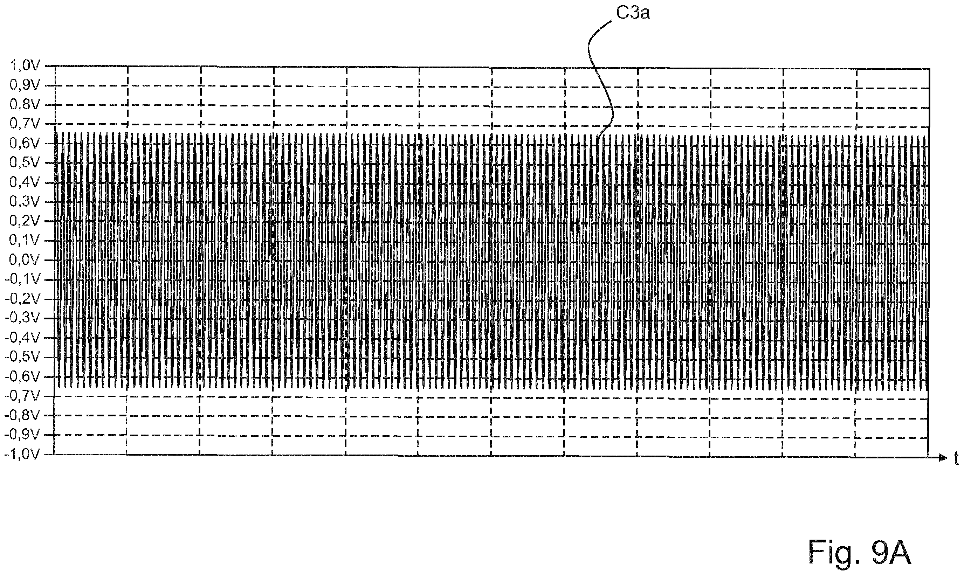

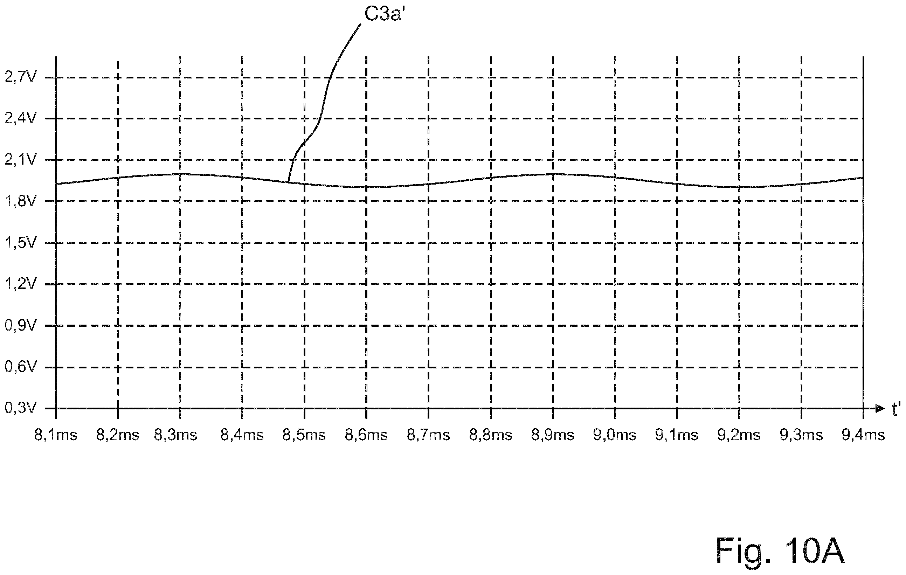

When supplying the amplitude modulated signals s_am1, s_am2 with the abovementioned phase shifts to the respective terminals 112a, 114b of the series connection 110 of Fig. 1, and especially in the absence of the object OBJ to be measured, a substantially vanishing sum signal (regarding a signal envelope) is obtained as said measurement signal s_m1 at said first node N1. Curve C3a of Fig. 9A schematically depicts this scenario. Curve C3a' of Fig. 10A schematically depicts a processed measurement signal s_p1 (Fig. 1) derived from the respective measurement signal s_m1 of Fig. 9A (curve C3a), e.g. by envelope demodulation via the envelope demodulator 132 (Fig. 1). It can be seen that curve C3a' is basically constant over the time axis t'.

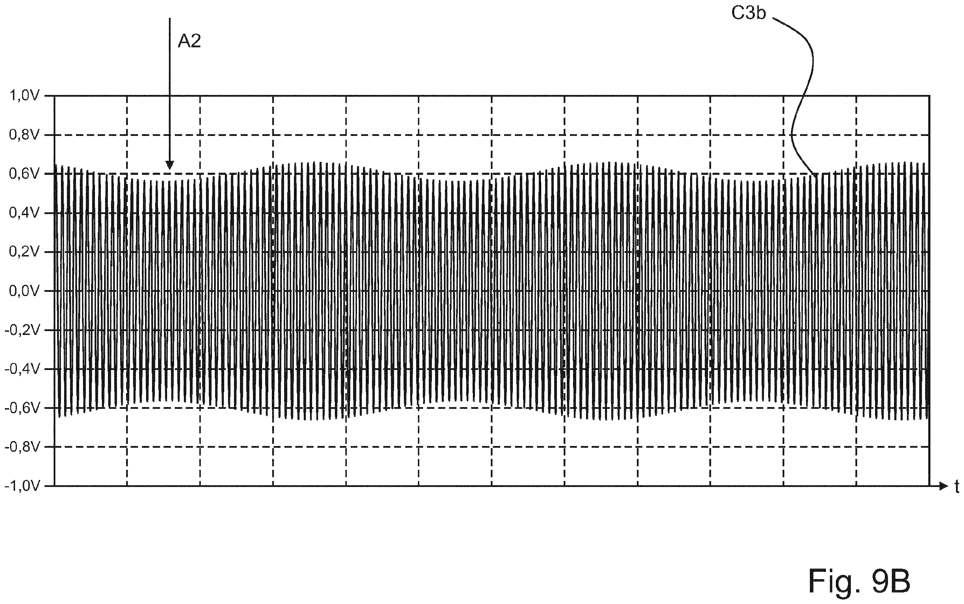

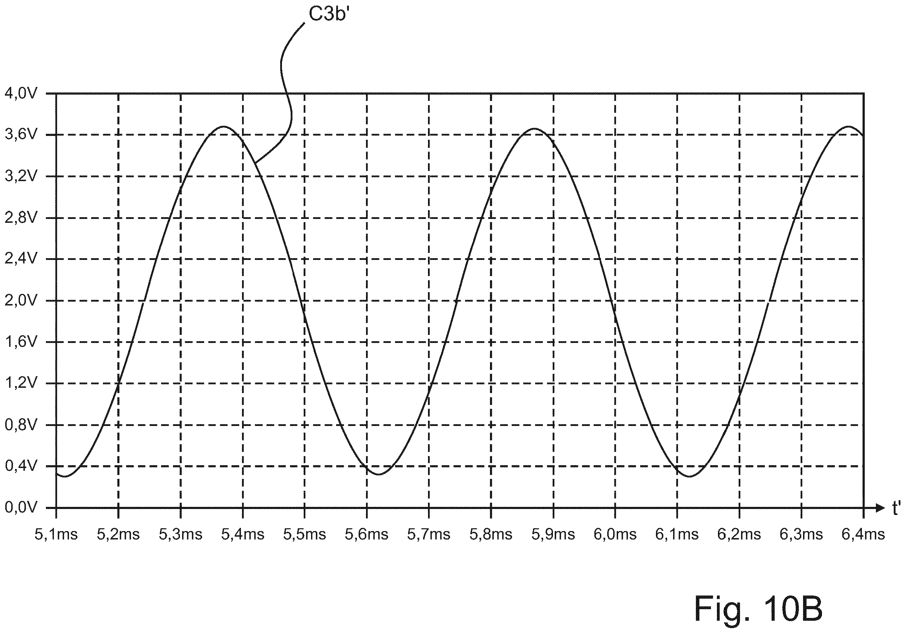

According to further preferred embodiments, if said object OBJ to be measured (Fig. 1) is present or is moved towards the first impedance 112 of the series connection 110 (cf. arrow A1 of Fig. 1), the measurement signal s_m1 is detuned, so that a nonvanishing sum signal (regarding a signal envelope) is obtained as said measurement signal s_m1 at said first node N1. Curve C3b of Fig. 9B schematically depicts this scenario, cf. e.g. the local minimum of the envelope of curve C3b indicated by the arrow A2. Curve C3b' of Fig. 10B schematically depicts a processed measurement signal s_p1 (Fig. 1) derived from the respective measurement signal s_m1 of Fig. 9B (curve C3b), e.g. by envelope demodulation via the envelope demodulator 132 (Fig. 1). It can be seen that curve C3b' is not constant over the time axis t', but rather comprises information on the object OBJ to be measured. As an example, a detuning of an amplitude of the measurement signal s_m1 may occur if said object OBJ comprises diamagnetic material such as e.g. copper, aluminum, brass, wherein said detuning results from eddy currents induced in said diamagnetic material, which account for an attenuation of the measurement signal s_m1. Said amplitude detuning is characteristic for diamagnetic material as it is associated with a specific phase, which can be distinguished from a detuning of said measurement signal s_m1 due to e.g. proximity of an object OBJ comprising ferrous metal.

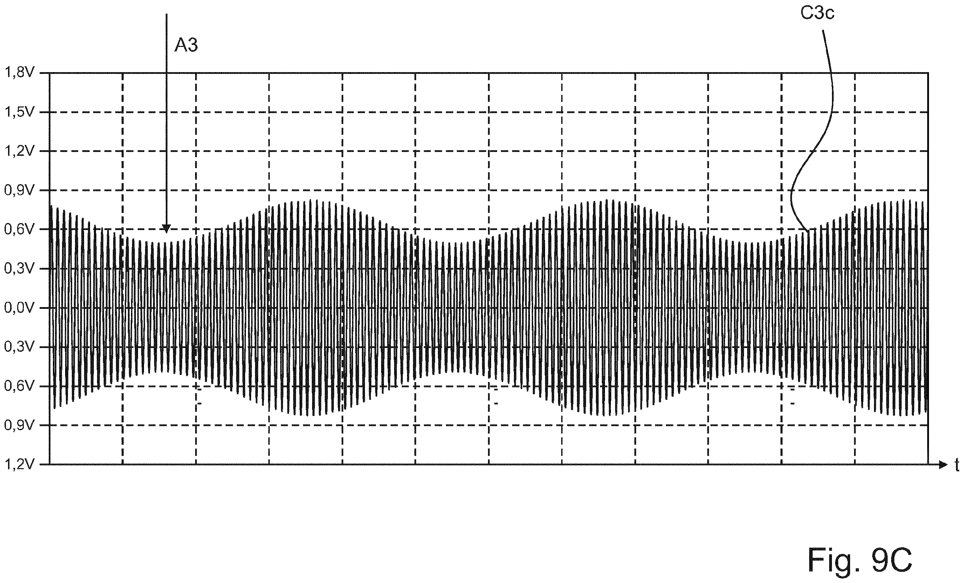

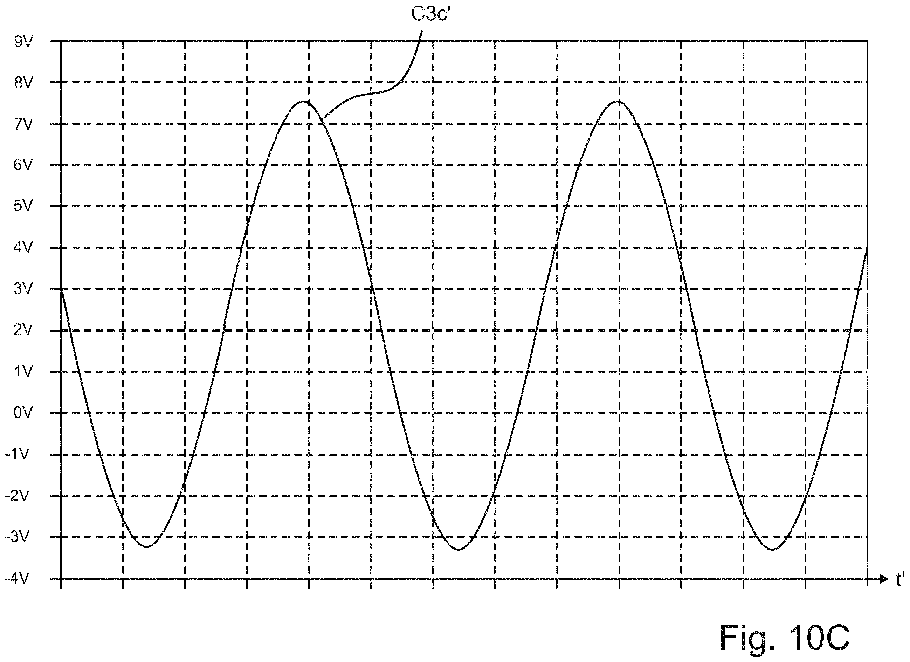

Fig. 9C schematically depicts a further scenario, wherein the measurement signal s_m1 is detuned by an object OBJ (Fig. 1) comprising ferrous metal, cf. curve C3c and arrow A3. Curve C3c' of Fig. 10C schematically depicts a processed measurement signal s_p1 (Fig. 1) derived from the respective measurement signal s_m1 of Fig. 9C (curve C3c), e.g. by envelope demodulation via the envelope demodulator 132 (Fig. 1).

According to further preferred embodiments, by evaluating the signal properties such as e.g. amplitude and/or phase of the processed measurement signal s_p1 (Fig. 1), information on the object OBJ to be measured may be determined. As already explained above, according to further preferred embodiments, a detuned processed measurement signal s_p1 may be compensated using said compensation signal s_comp, cf. Fig. 6, and the complex output signal s_out obtained thereby comprises the information related to phase shift and/or attenuation imparted on said measurement signal s_m1 by the object OBJ to be measured.

Advantageously, if a sweep generator arrangement 122 such as exemplarily depicted by Fig. 5 is used for generating the amplitude modulated signals s_am1, s_am2, the measurements and evaluation explained above with reference to Fig. 9A to 10C may be carried out for a plurality of carrier frequencies, corresponding to the frequency range covered by the sweep. This way, detailed information on the object OBJ to be measured may be obtained.

According to further preferred embodiments, the signal generator 120 (Fig. 1) is configured to selectively provide the first amplitude modulated signal s_am1 and the second amplitude modulated signal s_am2 with a predetermined carrier frequency, which enables measurements at said specific carrier frequency. While for both the first amplitude modulated signal and the second amplitude modulated signal preferably said (same) carrier frequency is used, particularly to obtain a vanishing sum signal in a "tuned state" (i.e., absence of the object OBJ), according to further preferred embodiments, the carrier frequency for both signals s_am1, s_am2 may be varied substantially arbitrarily, which enables to perform measurements at respective different frequencies, as mentioned above. This way, e.g. when using inductive elements as said first impedance 112 and said second impedance 114, measurements in different depths of the object OBJ to be measured may be made, as the skin depth is dependent on frequency.

Generally, the principle according to the embodiments enables to transfer information of the object OBJ to be measured from a frequency range associated with said carrier signals s_c1, s_c2 to a lower frequency range associated with said control signals s_ctrl1, s_ctrl2. This way, comparatively high carrier frequencies (e.g. in the GHz (gigahertz) range, for example around 2.4 GHz) may be used, and the amplitude and/or phase variations (or the corresponding information, respectively) obtained by using these carrier signals may be transferred without loss to lower frequencies, for example in the range of the frequency of the control signals, e.g. for efficient evaluation with common ADCs. Especially, according to further preferred embodiments, said phase and/or amplitude variations as obtained at the carrier frequency are scaled proportionally to the lower frequency range associated with the control signals, so that they can precisely be evaluated in said lower frequency range using less costly hardware and/or offering higher precision as compared to a direct evaluation of signals e.g. in the frequency range of the carrier signals (e.g., around 2.4 GHz).

As an example, according to some embodiments, the frequency of the carrier signals may e.g. range around 2.4 GHz, whereas the frequency of the control signals ranges around 10 kHz. According to Applicant's analysis, for such configurations, advantageously, a resolution or precision regarding the evaluation of the processed signal s_p1, s_p1' of about 18 bit may be attained. According to further embodiments, when using control signals in the 1 kHz range, the resolution or precision regarding the evaluation of the processed signal s_p1, s_p1' may even be increased to about 28 bit. This way, many new fields of application are enabled by applying the principle according to the embodiments.

According to further embodiments, no correlation (neither in amplitude, nor in phase) between the control signals and the carrier signals is required, which offers further degrees of freedom for the operation of the apparatus 100 according to the embodiments. Thus, according to further preferred embodiments, e.g. the carrier frequency may be widely varied to obtain more detailed information related to the object OBJ to be measured. Also, according to further embodiments, the frequency of the control signals may be chosen to be constant (e.g., in combination with a constant or preferably a variable carrier frequency), so that an evaluation in the frequency range of said control signals is even further simplified. As an example, if filters or other means of signal processing are employed for measurement signals or processed signals in the frequency range of said control signals, said filters or other means of signal processing may specifically be designed for said constant frequency of the control signals thus further reducing complexity. As an example, according to further embodiments, a bandpass filter such as e.g. comprised in the combined filter and amplifier unit 137 of Fig. 6 may be employed, e.g. to prevent interference (e.g. resulting from external sources) on said error signal s_error, whereas for variable frequency of the control signals said bandpass filter would required a more complex structure for ensuring a tunable passband range and phase synchronicity.

As an example, when varying the carrier frequency of the carrier signals, due to frequency dependence of the skin depth of eddy currents induced by at least the first impedance 112 (Fig. 1) into the object OBJ, the depth of measurement within the object OBJ may be varied, thus e.g. enabling to detect hidden discontinuities or defects within the object OBJ. Also, a specific location, i.e. depth, of such hidden discontinuities or defects may be determined according to further embodiments.

According to further embodiments, multi-layer materials such as galvanized or electroplated objects OBJ comprising e.g. a base material (e.g., ferrous metal) and a top layer (e.g., electroplated zinc layer) may be analyzed. For example, the position, particularly depth, of a material interface between the base material and the electroplated layer may be precisely determined by using the principle according to the embodiments. According to further embodiments, other objects than solid bodies may also be analyzed, e.g. non-solid material such as fluids, for example emulsions, e.g. comprising oil and water. For example, density and/or attenuation measurements may be performed for such materials.

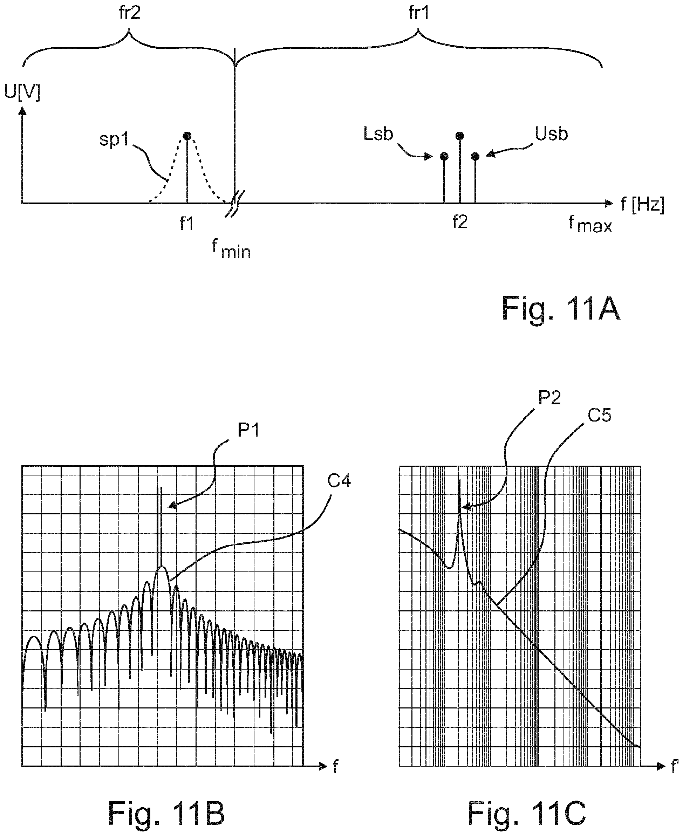

Figure 11A schematically depicts operating frequencies and associated frequency ranges according to further embodiments. Reference sign f1 denotes a frequency of the control signals s_ctrl1, s_ctrl2, cf. e.g. Fig. 3, 5, and reference sign f2 denotes the carrier frequency of the carrier signals s_c1, s_c2. Sidebands of the amplitude modulated signals s_am1, s_am2 are indicated by reference signs usb, Isb. A first frequency range within which the carrier frequency of the carrier signals s_c1, s_c2, cf. reference sign f2, may be varied according to some embodiments is indicated by reference sign fr1, said first frequency range fr1 ranging between a minimum frequency fmin and a maximum frequency fmax. A second frequency range fr2, which comprises spectral components f1 of the control signals s_ctrl1, s_ctrl2, ranges between a frequency of 0 Hz and the minimum frequency fmin. According to further preferred embodiments, the minimum frequency fmin may be chosen such that fmin-f1 is large enough to accommodate the spectrum sp1 of the control signals s_ctrl1, s_ctrl2, which may e.g. depend on a filter characteristic of the filters F1, F2. Generally, it is preferable to choose the frequencies f1, f2 such that the spectra of the amplitude modulated signals s_am1, s_am2 do not overlap with the spectrum sp1.

Curve C4 of figure 11B schematically depicts a spectral plot of the amplitude modulated signals s_am1, s_am2 as e.g. obtained by the signal generator 120a of Fig. 3. It can be seen that peaks P1 are centered around about 100 kHz. Curve C5 of figure 11C schematically depicts a spectral plot of first processed signal s_p1 as obtained after envelope demodulation. It can be seen that a peak P2 is centered around about 2 kHz.

Figure 12 schematically depicts a simplified block diagram of an apparatus 100a according to a further embodiment. The apparatus 100a comprises a signal generator 120c as explained above with reference to Fig. 5. The amplitude modulated signals s_am1, s_am2 provided by said signal generator 120c are amplified by respective amplifiers or drivers 124a, 124b, and the so obtained amplified amplitude modulated signals are provided to the terminals 112a, 114b, leading to a sum signal at node N1 corresponding to the first measurement signal s_m1. The first measurement signal s_m1 is envelope demodulated by envelope demodulator 132a to obtain the first processed signal s_p1. The apparatus 100a further comprises an evaluation device 130a as explained above with respect to Fig. 6, which is configured to determine a (usually complex) output signal s_out based on said first processed signal s_p1. According to further embodiments, said output signal s_p1 may e.g. be represented by a real part and an imaginary part and/or by polar coordinates and the like.

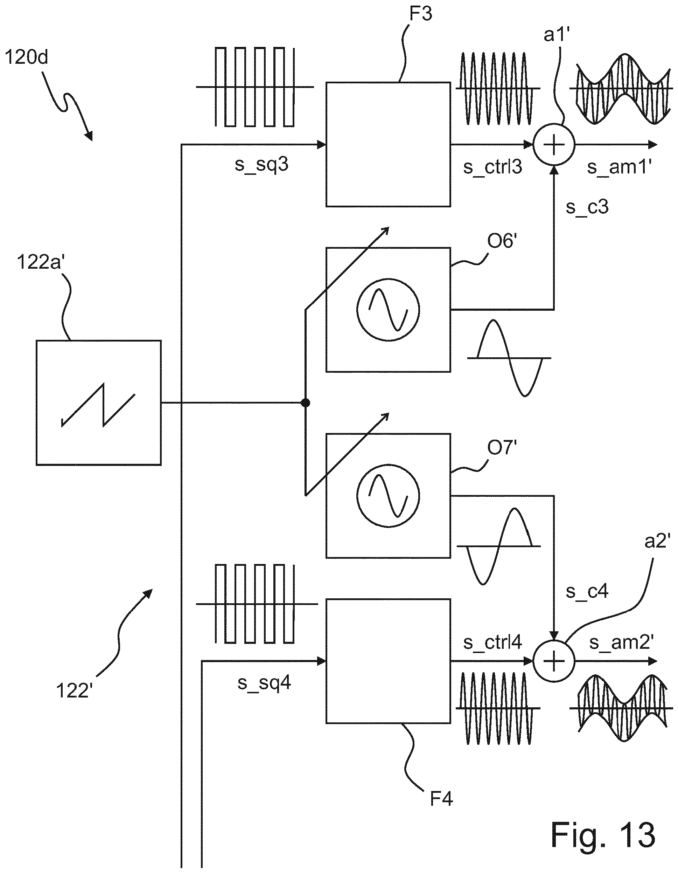

Figure 13 schematically depicts a simplified block diagram of a signal generator 120d according to a further embodiment. Similar to the signal generator 120b explained above with reference to Fig. 4, the signal generator 120d of Fig. 13 provides amplitude modulated signals s_am1', s_am2' which are obtained by adding respective third and fourth carrier signals s_c3, s_c4 with respective third and fourth control signals s_ctrl3, s_ctrl4 each by means of the adders a1', a2'. According to the present embodiment, the third control signal s_ctrl3, which is preferably a sinusoidal signal, is derived from a third square wave signal s_sq3 by means of a third filter F3, preferably a bandpass filter, and the fourth control signal s_ctrl4, which is preferably also a sinusoidal signal, is derived from a fourth square wave signal s_sq4 by means of a fourth filter F4, preferably also a bandpass filter.

According to further preferred embodiments, the third and fourth square wave signals s_sq3, s_sq4 comprise a relative phase shift of 0 degrees, i.e. having the same phase, and the third and fourth filters F3, F4 are configured such that they have the same characteristic and that they preserve said relative phase shift of 0 degrees. In other words, the sinusoidal control signals s_ctrl3, s_ctrl4 obtained by said filters F3, F4 comprise the same frequency and the desired phase shift of presently 0 degrees.

According to further preferred embodiments, the third and fourth carrier signals s_c3, s_c4 may be provided by a sweep generator arrangement 122' comprising controllable oscillators O6', O7' that provide a preferably sinusoidal output signal each in form of the carrier signals s_c3, s_c4 under control of a sawtooth generator 122a'. Similar to the configuration 120b of Fig. 4, the carrier signals s_c3, s_c4 of the oscillators O6', O7' according to Fig. 13 have a predetermined relative phase shift, said phase shift preferably being 180 degrees. Using said sweep generator arrangement 122' advantageously enables to provide third and fourth carrier signals s_c3, s_c4 with different or generally time-varying frequency thus enabling to perform measurements related to the object OBJ to be measured at respective different carrier frequencies.

According to further preferred embodiments, similar to the first and second square wave signals s_sq1, s_sq2 as explained above with reference to figure 5, the square wave signals s_sq3, s_sq4 of Fig. 13 may be provided by the evaluation device 130, cf. Fig. 1, also cf. reference numeral c1 of Fig. 1.

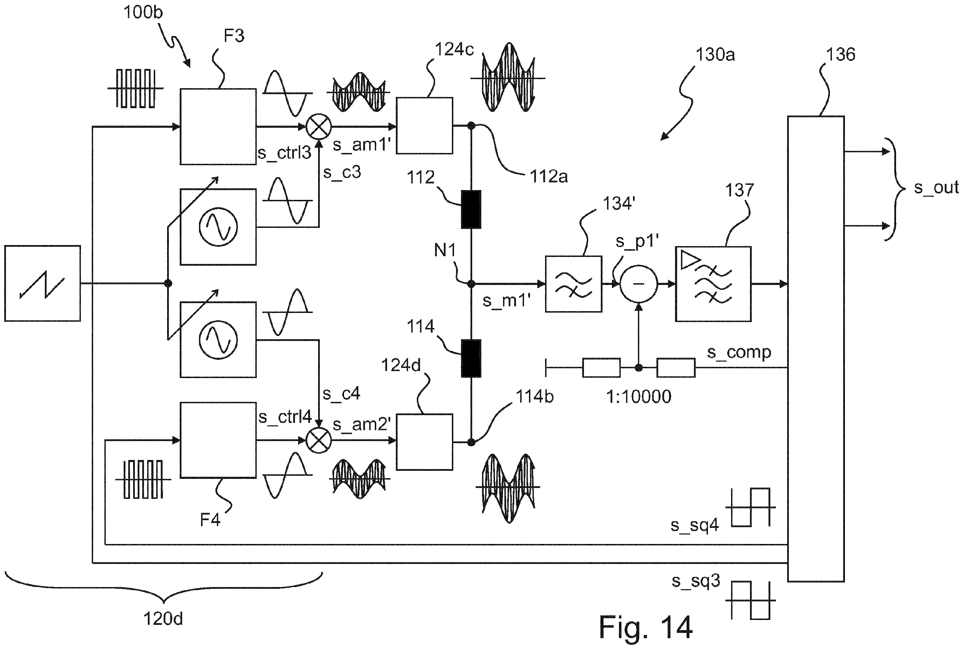

Figure 14 schematically depicts a simplified block diagram of an apparatus 100b according to a further embodiment. The apparatus 100b comprises a signal generator 120d as explained above with reference to Fig. 13. The amplitude modulated signals s_am1', s_am2' provided by said signal generator 120c are amplified by respective amplifiers or drivers 124c, 124d, and the so obtained amplified amplitude modulated signals are provided to the terminals 112a, 114b, leading to a sum signal at node N1 corresponding to the first measurement signal s_m1'. The first measurement signal s_m1' is filtered by a high-pass filter 134' to obtain the first processed signal s_p1'. Advantageously, and in contrast to the embodiments explained above with respect to figure 12, no envelope demodulator 132a is required for the determination of the first processed signal s_p1' according to the embodiments explained with reference to figure 14. The apparatus 100a further comprises an evaluation device 130a as explained above with respect to Fig. 6, which is configured to determine a (usually complex) output signal s_out based on said first processed signal s_p1'. Also, according to further preferred embodiments, said evaluation device 130a provides the third and fourth square wave signals s_sq3, s_sq4 to the signal generator 120d. According to further preferred embodiments, a signal portion of the first processed signal s_p1' corresponding to the carrier signal frequency of the employed carrier signals s_c3, s_c4 may be removed by said evaluation device 130a.

According to further embodiments, it is also possible to provide an optional further high-pass filter for eliminating the carrier signal from said first measurement signal s_m1'. As an example, said optional further high-pass filter may comprise an operational amplifier, may receive an amplified version of the second amplitude modulated signal s_am2' as provided to the second terminal 114b of said second impedance 114, and an output of said optional further high-pass filter may be subtracted by means of a subtractor (not shown) from said first measurement signal s_m1'. Advantageously, this results in a lower load for the closed-loop control provided by said evaluation device 130a as the removal of the carrier signal frequencies has the effect that said first processed signal s_p1' is a vanishing in the tuned state (i.e., absence of the object OBJ to be measured) of the apparatus 100b, instead of comprising carrier signal components.

According to further embodiments, the above explained optional further high-pass filter is not provided, and the closed-loop control of the evaluation device 130a may be configured to remove carrier signal components from said first processed signal s_p1', i.e. in addition to compensating said first processed signal s_p1' to attain the desired vanishing signal. In these embodiments, the compensation signal s_comp may also comprise spectral components related to said carrier signals.

According to further preferred embodiments, the carrier frequency of the third and fourth carrier signals s_c3, s_c4 of the signal generator 120d as used within the apparatus 100b exemplarily depicted by figure 14, is smaller than a frequency of the third and fourth control signals s_ctrl3, s_ctrl4. This way, measurements related to the object OBJ may be made using the (lower) frequency range of the carrier signals s_c3, s_c4, and results obtained thereby, e.g. in form of a detuned first measurement signal s_m1', may be transformed to the (higher) frequency range of the third and fourth control signals s_ctrl3, s_ctrl4. In this respect, according to further embodiments and similar to the embodiments explained above with reference to Fig. 3, 12, amplitude and/or phase information of the detuned first measurement signal s_m1' may be transferred into another frequency range, presently the frequency range of the control signals s_ctrl3, s_ctrl4 for efficient evaluation.

Further advantageously, filters 134', 137 that may be provided according to preferred embodiments, may be designed for the frequency range of the control signals s_ctrl3, s_ctrl4, rather than the (presently lower) frequency range of the carrier signals s_c3, s_c4. Further advantages of measurements with a comparatively low frequency, as enabled by preferred embodiments according to Fig. 14, relate to the ability to detect discontinuities or defects in the object OBJ to be measured in greater depths, due to the increased skin-depth related to the comparatively low measurement frequency.

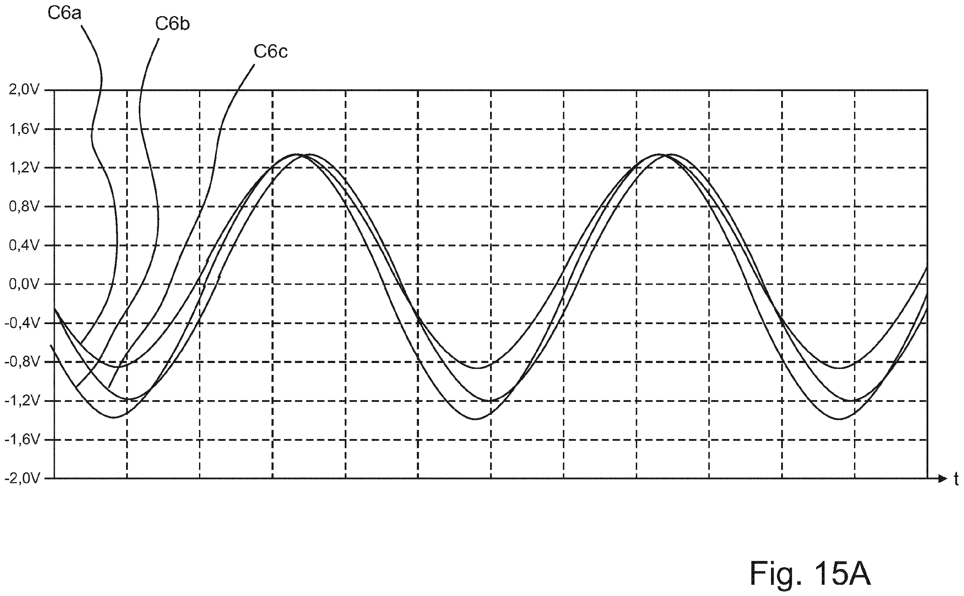

Figure 15A schematically depicts signals according to further preferred embodiments. Curve C6a represents an output signal s_out as obtained by the apparatus 100b according to figure 14 in a tuned state, i.e. the absence of an object OBJ to be measured. The sinusoidal shape of curve C6a results from a spectral component corresponding with the carrier signal used by the apparatus 100b.

The further curve C6b represents an output signal s_out as obtained by the apparatus 100b when influencing the series connection 110 or the first impedance 112 of said series connection 110, respectively, with diamagnetic material, for instance by moving an object comprising aluminium towards the first impedance 112. As can be seen, in contrast to the first curve C6a, the second curve C6b comprises similar or identical phase, but modified amplitude, which is due to eddy currents resulting in the aluminum body of the object.

The further curve C6c represents an output signal s_out as obtained by the apparatus 100b when influencing the series connection 110 or the first impedance 112 of said series connection 110, respectively, with ferrous metal material, for instance by moving an object comprising iron towards the first impedance 112. As can be seen, in contrast to the first and second curves C6a, C6b, the third curve C6c expectedly comprises a non-vanishing phase shift with respect to said first curve C6a.

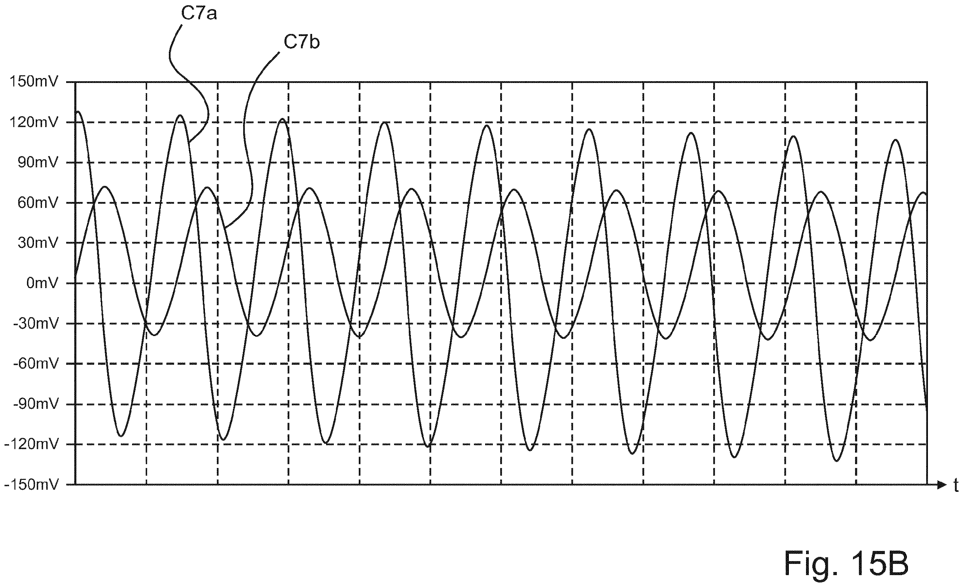

Figure 15B schematically depicts signals according to further embodiments. The signals depicted by figure 15B have been obtained by subtracting a processed signal of the evaluation device 130a in the tuned state, i.e. only comprising spectral components of the carrier signal, from the respective processed signals as obtained in a detuned state, wherein for example diamagnetic material and/or ferrous metal material is present in the proximity of the first impedance 112. In this regard, curve C7a represents a difference signal where the series connection 110 is detuned by providing aluminum material to the first impedance 112, and curve C7b represents a different signal where detuning is performed by providing iron to the first impedance 112. Note that the reduced signal amplitudes of the signals exemplarily depicted by figure 15B result from the fact that, as mentioned above, the carrier signal components have been subtracted, which results in a significantly reduced load for the closed-loop control of the evaluation unit 130a.

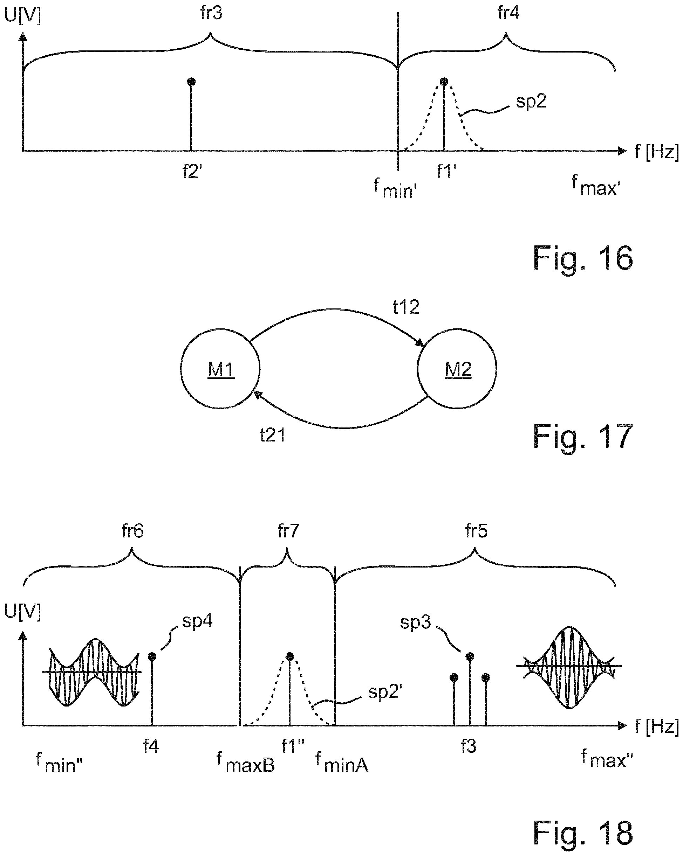

Figure 16 schematically depicts operating frequencies and associated frequency ranges according to further embodiments, which are particularly suited for the operation of the apparatus 100b as exemplarily by figure 14. Reference sign f1' denotes a frequency of the control signals s_ctrl3, s_ctrl4, cf. e.g. Fig. 4, and reference sign f2' denotes the carrier frequency of the carrier signals s_c3, s_c4. A third frequency range within which the carrier frequency of the carrier signals s_c3, s_c4, cf. reference sign f2', may be varied according to preferred embodiments, is indicated by reference sign fr3. A fourth frequency range fr4, which comprises spectral components f1' of the control signals s_ctrl3, s_ctrl4, ranges between a frequency fmin' a frequency fmax'. A spectral characteristic of the optional bandpass filter 137 (Fig. 14) is schematically depicted by reference sign sp2. According to further preferred embodiments, the frequency ranges fr3, fr4 may be chosen such that the spectral characteristic sp2 does not overlap with the frequency f2'.

According to further embodiments, the apparatus 100 (Fig. 1) is configured to operate in different operating modes, preferably in a time-multiplexed manner. This is exemplarily depicted by the state diagram of Fig. 17. In a first state or operating mode M1, the apparatus 100 is configured to at least temporarily obtain said first amplitude modulated signal s_am1 and said second amplitude modulated signal s_am2 as exemplarily explained above with reference to Fig. 3 and/or Fig. 5 and/or Fig. 12. I.e., in said first state M1, the signal generator 120 (Fig. 1) may operate according to Fig. 3 or Fig. 5 or Fig. 12.

By contrast, in a second state or operating mode M2 (Fig. 17) the apparatus 100 is configured to at least temporarily obtain said first amplitude modulated signal s_am1' and said second amplitude modulated signal s_am2' as exemplarily explained above with reference Fig. 4 or Fig. 13 or Fig. 14. I.e., in said second state M2, the signal generator 120 (Fig. 1) may operate according to Fig. 4 or Fig. 13 or Fig. 14. According to further embodiments, a respective operational flexibility of the signal generator 120 may be obtained by providing at least some, preferably all of the involved signals s_am1, s_am2, s_am1', s_am2' by means of DDS (direct digital synthesis) techniques. As an example, according to further particularly preferred embodiments, a corresponding DDS circuit 1200 may be provided e.g. in the signal generator 120. According to further embodiments, however, the DDS circuit 1200 may also be comprised within the evaluation unit 130 and/or at least partly implemented by using one or more components of said evaluation unit 130. As an example, according to further embodiments, DDS techniques may be employed which comprise hardware components as well as software components, wherein the respective software components according to further embodiments may e.g. be implemented in form of a computer program for the calculating unit 1362 of the control unit 136.

State transitions between the operating modes M1, M2 (Fig. 17) are indicated with reference signs t12, t21 of figure 17. According to further embodiments, more than the two exemplarily depicted operating modes M1, M2 may be provided. As an example, according to further embodiments, one or more operating modes may be provided in which measurements are performed by using a basically constant carrier frequency for the carrier signals, whereas one or more further operating modes may be comprised in which carrier signals with time-varying carrier frequency are employed. According to further embodiments, it is also possible to provide several operating modes, wherein the signal generator operates e.g. according to figure 3, wherein in some of these operating modes a constant carrier frequency is used, and wherein in some other of these operating modes a non-constant carrier frequency is used. Similarly, according to further embodiments, it is also possible to provide several further operating modes, wherein the signal generator operates e.g. according to figure 4, wherein in some of these further operating modes a constant carrier frequency is used, and wherein in some other of these further operating modes a non-constant carrier frequency is used.

According to further embodiments, as an example, an operation comprising non-constant carrier frequency may be obtained by the sawtooth generator arrangement 122 as exemplarily depicted by figure 5. According to further embodiments, other configurations are also possible for providing non-constant carrier frequencies.

Turning now to figure 18, reference sign f1" represents a system frequency according to further particularly preferred embodiments. As an example, the square wave signals s_sq1, s_sq2 as e.g. generated by control circuit 136 exemplarily depicted by figure 6 and/or the square wave signals s_sq3, s_sq4 as e.g. generated by control circuit 136 exemplarily depicted by figure 14 may comprise a fundamental frequency which is basically identical to said system frequency f2" as exemplarily depicted by figure 18. Reference sign sp2' indicates a frequency characteristic of a bandpass filter related to said system frequency, cf. e.g. reference sign 137 of figure 12.

According to preferred embodiments, said system frequency f2" may e.g. comprise 10 kHz (kilohertz). According to other preferred embodiments, said system frequency f2" may e.g. comprise 1 kHz. However, according to further embodiments, other frequency values and/or frequency ranges (higher or lower) are also possible for the system frequency.

According to further embodiments, reference sign fr5 indicates a frequency range within which a third frequency f3 may be varied according to a first mode M1 (Fig. 17) of operation. As an example, in said first mode M1 of operation, the signal generator 120 of the apparatus operates basically in accordance with the configuration 120a exemplarily depicted by figure 3, and said third frequency f3 corresponds with a carrier frequency of the respective carrier signals s_c1, s_c2. Further correspondingly, reference sign sp3 exemplarily depicts a spectrum of the amplitude modulated signals as used in said first mode M1 of operation.

According to further embodiments, reference sign fr6 indicates a frequency range within which a fourth frequency f4 may be varied according to a second mode M2 (Fig. 17) of operation. As an example, in said second mode M2 of operation, the signal generator 120 of the apparatus operates basically in accordance with the configuration 120b exemplarily depicted by figure 4, and said fourth frequency f4 corresponds with a carrier frequency of the respective carrier signals s_c3, s_c4. Further correspondingly, reference sign sp4 exemplarily depicts a spectrum of the amplitude modulated signals as used in said second mode M2 of operation.

According to further particularly preferred embodiments, depending on the respective mode of operation M1, M2, a carrier frequency for performing the measurements according to the principle of the embodiments may be arbitrarily varied (even dynamically, e.g. within one specific measurement, according to preferred embodiments) within an overall frequency range defined by minimum frequency fmin" and a maximum frequency fmax", said overall frequency range inter alia covering the frequency ranges fr5, fr6 as explained above. Frequency variation may, according to further preferred embodiments, e.g. be obtained by sweeping or any other suitable technique such as e.g. selecting in a time-multiplexed manner different distinct frequencies within a said overall frequency range.

This way, frequency-dependent information of the object OBJ to be measured may be gained, such as e.g. related to electric and/or magnetic conductivity (i.e., permeability) and/or skin depth and/or polarisation and/or dipole moment excitation within dipole molecules, and may be efficiently evaluated e.g. in the frequency range associated with the control signals s_ctrl1, .., s_ctrl4, i.e. the system frequency f1".

According to further embodiments, exemplary values for the minimum frequency fmin" may e.g. comprise about 100 Hz (Hertz) or less, and exemplary values for the maximum frequency fmax" may e.g. comprise about 100 MHz (megahertz). Alternatively, maxim frequencies in the GHz range are also possible according to further embodiments. As an example, the series connection 110 comprising first impedance 112 and second impedance 114, may e.g. be operated within an overall frequency range covering frequencies between 100 Hz and 100 MHz. As a further example, the first impedance 112 may e.g. comprise an inductive element an impedance of which depends on the physical parameter to be measured.

According to further preferred embodiments, when varying the measurement frequency, the frequency range fr7 may be avoided. In other words, the carrier frequency for either mode of operation may be selected such that it is not comprised by the seventh frequency range fr7. According to further embodiments, said seventh frequency range fr7 is basically defined by the frequency characteristic sp2' of the bandpass filter 137, based on the control signals s_ctrl1, s_ctrl2, s_ctrl3, s_ctrl4.

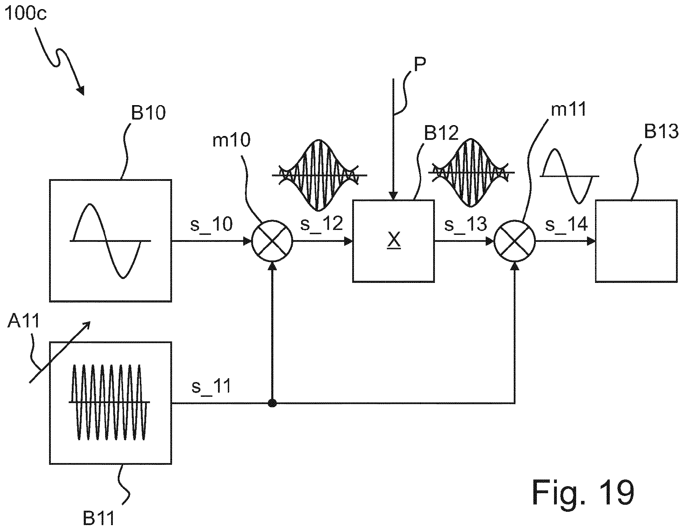

Figure 19 schematically depicts a simplified block diagram of an apparatus 100c according to further examples. Block B10 provides a signal s10, which is preferably a sinusoidal signal, and block B11 provides a signal s11, which is preferably also a sinusoidal signal, preferably with a variable frequency, cf. the arrow A11. A multiplier m10 effects amplitude modulation of said signal s10 by means of signal s11, wherein signal s11 represents a carrier frequency for said amplitude modulation, and wherein an amplitude modulated signal s12 is obtained at an output of said multiplier m10. Block B12 represents a sensor element for example comprising at least one impedance X depending on at least one physical parameter P to be measured. Block B12 receives signal s12 as input signal and outputs an output signal s13 an amplitude and/or phase of which has been altered with respect to the input signal s12 depending on said impedance X and the parameter P. The output signal s13 is demodulated or downconverted, respectively, by multiplying it with the signal s11 via a further multiplier m11, thus obtaining a demodulated signal s14 at an output of the multiplier m11. The demodulated signal s14 advantageously comprises information on the altered amplitude and/or phase of said signal s13 with respect to the input signal s12 depending on said physical parameter P, and thus also information on said physical parameter P. The demodulated signal s14 may be evaluated by an evaluation circuit schematically depicted by block B13 of Fig. 19.

Similar to the impedances 112, 114 of the embodiments explained above with reference to Fig. 1 to Fig. 18, the sensor element B12 may comprise at least one inductive element and/or a capacitive element and/or a resistive element and/or an optical element and/or any other element an impedance of which depends on the physical parameter P to be measured. According to further embodiments, said sensor element B12 may comprise any combination of two or more of the aforementioned elements.

The principle according to the embodiments, which may e.g. be used by any of the exemplarily explained apparatus 100 and/or 100a and/or 100b and/or 100c, offers at least the following advantages:
Amplitude and/or phase information of the amplitude-modulated signals s_am1, s_am2, s_am1', s_am2', s_am3, s_am4, s12, which may e.g. be influenced by the physical parameter P to be measured, may be conveyed to the evaluation device 130 (Fig. 1) (and/or to the evaluation circuit B13, cf. Fig. 19) within a system frequency which in many cases comprises lower frequencies as compared to the respective carrier signals of the amplitude-modulated signals. Advantageously, signal processing components or generally all components of the evaluation device 130 (Fig. 1) (and/or to the evaluation circuit B13, cf. Fig. 19) may be designed for said system frequency and are not required to be configured for processing signals in other frequency ranges. In many cases, signal processing is less complex in a frequency range comprising said system frequency, as compared to higher frequencies.

Advantageously, for particularly high carrier frequencies, providing the signal processing within a frequency range comprising said system frequency enables a precise evaluation of the parameter to be measured, e.g. a predetermined precision, which may not be possible with commercially available components at said particularly high carrier frequencies.

Especially when using one or more inductive elements for the series connection 110 (Fig. 1) and/or the sensor element B12 (Fig. 19), as the skin depth is inter alia frequency dependent, a depth of measurement within the object OBJ to be measured may be controlled by providing one or more different, predetermined carrier frequencies. This way, as an example, depth information e.g. related to discontinuities of the object OBJ to be measured and/or its surface or deeper layers may be obtained.

When using one or more inductive elements for the series connection 110 (Fig. 1) and/or the sensor element B12 (Fig. 19), layers of different materials with different electric and/or magnetic properties may be determined and/or characterized. As an example, when considering an object OBJ to be measured which comprises a ferrous metal as a base material and e.g. an electroplated surface layer (comprising zinc, for example) arranged on the surface of said base material, by selecting the carrier frequency for measurement according to the principles of the embodiments, individual measurements may be made for the base material and the electroplated surface layer ("duplex measurements"), which even enables to provide a calibration-free measurement technique. Advantageously, the principle according to the embodiments enables to determine the permeability of the base material, e.g. without any influence of the zinc layer, and to determine the electric conductivity of the zinc layer, e.g. without any influence of the base material.

According to further embodiments, particularly if using one or more capacitive elements for the series connection 110 (Fig. 1) and/or the sensor element B12 (Fig. 19), and especially with higher carrier frequencies, molecular resonances of the object OBJ to be measured may be detected, especially employing absorption-based methods.

According to further embodiments, as different metals comprise different electrical conductivity and/or permeability, based on the output signal s_out, a distinction between different metal materials may be made, especially independent of a distance between the first impedance 112 (Fig. 1) and/or the sensor element B12 (Fig. 19) and/or independent of a geometry of the object OBJ.

According to further embodiments, moisture may be detected, especially using higher carrier frequencies. As an example, the object OBJ (Fig. 1) may also comprise a wall or a wooden object.

According to further embodiments, electric conductivity of the object OBJ may be measured at different frequencies within a single measurement, e.g. using a sweep of the carrier frequency as enable by the apparatus of Fig. 12. This way, corresponding measurements, which may e.g. be required in aviation industry, may be simplified.

According to further embodiments, the series connection 110 of the configurations explained above with reference to Fig. 12 and/or 14 and/or the sensor element B12 may be modified such that e.g. a Wheatstone bridge (not shown) is obtained, e.g. by connecting in parallel to the series connection 110 a further series connection (not shown). In these embodiments, for example, the measurement signal s_m1 may be derived from the bridge voltage available at the intermediate nodes of the respective series connection. The further evaluation of a so obtained measurement signal may be performed as explained above with reference to Fig. 1 to Fig. 19.

## Claims

1. Apparatus (100; 100a; 100b) for measuring a physical parameter, comprising a series connection (110) of at least a first electrical impedance (112) and a second electrical impedance (114), wherein said first electrical impedance (112) has a first terminal (112a) and a second terminal (112b), wherein an impedance value of at least said first electrical impedance (112) depends on said physical parameter, wherein said second electrical impedance (114) has a first terminal (114a) and a second terminal (114b), and wherein said second terminal (112b) of said first electrical impedance (112) is connected to said first terminal (114a) of said second electrical impedance (114) forming a first node (N1), wherein said apparatus (100; 100a; 100b) further comprises a signal generator (120) configured to apply a first amplitude modulated signal (s_am1; s_am1') to said first terminal (112a) of said first electrical impedance (112) and a second amplitude modulated signal (s_am2; s_am2') to said second terminal (114b) of said second electrical impedance (114), said apparatus (100; 100a; 100b) further comprising an evaluation device (130) configured to receive a first measurement signal (s_m1; s_m1') from said first node (N1) and to determine information on said at least one physical parameter depending on said first measurement signal (s_m1; s_m1').

2. Apparatus (100; 100a; 100b) according to claim 1, wherein the first amplitude modulated signal (s_am1) and the second amplitude modulated signal (s_am2) comprise the same carrier frequency.

3. Apparatus (100; 100a; 100b) according to at least one of the preceding claims, wherein the signal generator (120) is configured to selectively provide the first amplitude modulated signal (s_am1) and the second amplitude modulated signal (s_am2) with a predetermined carrier frequency, wherein preferably the signal generator (120) is configured to sweep the carrier frequency.

4. Apparatus (100; 100a; 100b) according to at least one of the preceding claims, wherein said signal generator (120) is configured to at least temporarily obtain said first amplitude modulated signal (s_am1) by multiplying a first carrier signal (s_c1) having a or said carrier frequency with a periodic first control signal (s_ctrl1) and/or to at least temporarily obtain said second amplitude modulated signal (s_am2) by multiplying a second carrier signal (s_c2) having said carrier frequency with a periodic second control signal (s_ctrl2), wherein said second carrier signal (s_c2) has a predetermined first phase shift with respect to said first carrier signal (s_c1), and wherein said second control signal (s_ctrl2) has a predetermined second phase shift with respect to said first control signal (s_ctrl1), wherein preferably said first phase shift and/or said second phase shift is 90 degrees or a multiple of 90 degrees.

5. Apparatus (100; 100a; 100b) according to at least one of the preceding claims, wherein said signal generator (120) is configured to at least temporarily obtain said first amplitude modulated signal (s_am1') by adding a third carrier signal (s_c3) having a or said carrier frequency with a periodic third control signal (s_ctrl3) and to at least temporarily obtain said second amplitude modulated signal (s_am2') by adding a fourth carrier signal (s_c4) having said carrier frequency with a periodic fourth control signal (s_ctrl4), wherein said fourth carrier signal (s_c4) has a predetermined third phase shift with respect to said third carrier signal (s_c3), and wherein said fourth control signal (s_ctrl4) has a predetermined fourth phase shift with respect to said third control signal (s_ctrl3), wherein preferably said third phase shift is 180 degrees, and wherein preferably said fourth phase shift is zero.

6. Apparatus (100; 100a; 100b) according to at least one of the preceding claims, wherein said evaluation device (130) comprises an envelope demodulator (132) and/or a bandpass filter (134) and/or a high-pass filter for processing said first measurement signal (s_m1), whereby a first processed signal (s_p1; s_p1') is obtained.

7. Apparatus (100; 100a; 100b) according to claim 6, wherein said evaluation device (130) comprises a control circuit (136) for providing a compensation signal (s_comp), wherein said compensation signal (s_comp) is determined such that a sum of said first processed signal (s_p1) and said compensation signal (s_comp) is zero.

8. Method of operating an apparatus (100; 100a; 100b) for measuring a physical parameter, said apparatus (100; 100a; 100b) comprising a series connection (110) of at least a first electrical impedance (112) and a second electrical impedance (114), wherein said first electrical impedance (112) has a first terminal (112a) and a second terminal (112b), wherein an impedance value of at least said first electrical impedance (112) depends on said physical parameter, wherein said second electrical impedance (114) has a first terminal (114a) and a second terminal (114b), and wherein said second terminal (112b) of said first electrical impedance (112) is connected to said first terminal (114a) of said second electrical impedance (114) forming a first node (N1), wherein said method comprises the following steps: applying (200), by means of a signal generator (120), a first amplitude modulated signal (s_am1; s_am1') to said first terminal (112a) of said first electrical impedance (112) and a second amplitude modulated signal (s_am2; s_am2') to said second terminal (114b) of said second electrical impedance (114), receiving (210), by an evaluation device (130), a first measurement signal (s_m1) from said first node (N1), and determining (220) information on said at least one physical parameter depending on said first measurement signal (s_m1).

9. Method according to claim 8, wherein the first amplitude modulated signal (s_am1) and the second amplitude modulated signal (s_am2) comprise the same carrier frequency.

10. Method according to at least one of the claims 8 to 9, wherein the signal generator (120) selectively provides the first amplitude modulated signal (s_am1) and the second amplitude modulated signal (s_am2) with a predetermined carrier frequency, wherein preferably the signal generator (120) sweeps the carrier frequency.

11. Method according to at least one of the claims 8 to 10, wherein said signal generator (120) at least temporarily obtains said first amplitude modulated signal (s_am1) by multiplying a first carrier signal (s_c1) having a or said carrier frequency with a periodic first control signal (s_ctrl1) and at least temporarily obtains said second amplitude modulated signal (s_am2) by multiplying a second carrier signal (s_c2) having said carrier frequency with a periodic second control signal (s_ctrl2), wherein said second carrier signal (s_c2) has a predetermined first phase shift with respect to said first carrier signal (s_c1), and wherein said second control signal (s_ctrl2) has a predetermined second phase shift with respect to said first control signal (s_ctrl1), wherein preferably said first phase shift and/or said second phase shift is 90 degrees or a multiple of 90 degrees.

12. Method according to at least one of the claims 8 to 11, wherein said signal generator (120) at least temporarily obtains said first amplitude modulated signal (s_am1') by adding a third carrier signal (s_c3) having a or said carrier frequency with a periodic third control signal (s_ctrl3) and at least temporarily obtains said second amplitude modulated signal (s_am2') by adding a fourth carrier signal (s_c4) having said carrier frequency with a periodic fourth control signal (s_ctrl4), wherein said fourth carrier signal (s_c4) has a predetermined third phase shift with respect to said third carrier signal (s_c3), and wherein said fourth control signal (s_ctrl4) has a predetermined fourth phase shift with respect to said third control signal (s_ctrl3), wherein preferably said third phase shift is 180 degrees, and wherein preferably said fourth phase shift is zero.

13. Method according to at least one of the claims 8 to 12, wherein said evaluation device (130) processes said first measurement signal (s_m1) by means of an envelope demodulator (132) and/or a bandpass filter (134) and/or a high-pass filter (134'), whereby a first processed signal (s_p1; s_p1') is obtained.

14. Method according to claim 13, wherein said evaluation device (130) provides, by means of a control circuit (136), a compensation signal (s_comp), wherein said compensation signal (s_comp) is determined such that a sum of said first processed signal (s_p1) and said compensation signal (s_comp) is zero.

15. Method according to at least one of the claims 8 to 14, wherein said steps of applying (200), receiving (210), and determining (220) are repeated for a predetermined number of measurements, wherein for each of said predetermined number of measurements a different carrier frequency is used.

## Patentansprüche

1. Vorrichtung (100; 100a; 100b) zum Messen eines physikalischen Parameters, umfassend eine Reihenschaltung (110) aus wenigstens einer ersten elektrischen Impedanz (112) und einer zweiten elektrischen Impedanz (114), wobei die erste elektrische Impedanz (112) einen ersten Anschluss (112a) und einen zweiten Anschluss (112b) aufweist, wobei ein Impedanzwert von wenigstens der ersten elektrischen Impedanz (112) von dem physikalischen Parameter abhängt, wobei die zweite elektrische Impedanz (114) einen ersten Anschluss (114a) und einen zweiten Anschluss (114b) aufweist, und wobei der zweite Anschluss (112b) der ersten elektrischen Impedanz (112) mit dem ersten Anschluss (114a) der zweiten elektrischen Impedanz (114) verbunden ist und einen ersten Knoten (N1) bildet, wobei die Vorrichtung (100; 100a; 100b) ferner einen Signalgenerator (120) umfasst, der dafür konfiguriert ist, ein erstes amplitudenmoduliertes Signal (s_am1; s_am1') an den ersten Anschluss (112a) der ersten elektrischen Impedanz (112) und ein zweites amplitudenmoduliertes Signal (s_am2; s_am2') an den zweiten Anschluss (114b) der zweiten elektrischen Impedanz (114) anzulegen, wobei die Vorrichtung (100; 100a; 100b) ferner eine Auswertungsvorrichtung (130) umfasst, die dafür konfiguriert ist, ein erstes Messsignal (s_m1; s_m1') von dem ersten Knoten (N1) zu empfangen und Informationen über den wenigstens einen physikalischen Parameter in Abhängigkeit von dem ersten Messsignal (s_m1; s_m1') zu bestimmen.

2. Vorrichtung (100; 100a; 100b) nach Anspruch 1, wobei das erste amplitudenmodulierte Signal (s_am1) und das zweite amplitudenmodulierte Signal (s_am2) die gleiche Trägerfrequenz aufweisen.

3. Vorrichtung (100; 100a; 100b) nach wenigstens einem der vorangehenden Ansprüche, wobei der Signalgenerator (120) dafür konfiguriert ist, selektiv das erste amplitudenmodulierte Signal (s_am1) und das zweite amplitudenmodulierte Signal (s_am2) mit einer vorbestimmten Trägerfrequenz bereitzustellen, wobei der Signalgenerator (120) vorzugsweise dafür konfiguriert ist, die Trägerfrequenz zu wobbeln.

4. Vorrichtung (100; 100a; 100b) nach wenigstens einem der vorangehenden Ansprüche, wobei der Signalgenerator (120) dafür konfiguriert ist, wenigstens vorübergehend das erste amplitudenmodulierte Signal (s_am1) durch Multiplizieren eines ersten Trägersignals (s_c1), das eine oder die Trägerfrequenz aufweist, mit einem periodischen ersten Steuersignal (s_ctrl1) zu erhalten, und/oder wenigstens vorübergehend das zweite amplitudenmodulierte Signal (s_am2) durch Multiplizieren eines zweiten Trägersignals (s_c2), das die Trägerfrequenz aufweist, mit einem periodischen zweiten Steuersignal (s_ctrl2) zu erhalten, wobei das zweite Trägersignal (s_c2) eine vorbestimmte erste Phasenverschiebung in Bezug auf das erste Trägersignal (s_c1) aufweist, und wobei das zweite Steuersignal (s_ctrl2) eine vorbestimmte zweite Phasenverschiebung in Bezug auf das erste Steuersignal (s_ctrl1) aufweist, wobei vorzugsweise die erste Phasenverschiebung und/oder die zweite Phasenverschiebung 90 Grad oder ein Vielfaches von 90 Grad beträgt.

5. Vorrichtung (100; 100a; 100p) nach wenigstens einem der vorangehenden Ansprüche, wobei der Signalgenerator (120) dafür konfiguriert ist, wenigstens vorübergehend das erste amplitudenmodulierte Signal (s_am1') durch Addieren eines dritten Trägersignals (s_c3), das eine oder die Trägerfrequenz aufweist, mit einem periodischen dritten Steuersignal (s_ctrl3) zu erhalten, und wenigstens vorübergehend das zweite amplitudenmodulierte Signal (s_am2') durch Addieren eines vierten Trägersignals (s_c4), das die Trägerfrequenz aufweist, mit einem periodischen vierten Steuersignal (s_ctrl4) zu erhalten, wobei das vierte Trägersignal (s_c4) eine vorbestimmte dritte Phasenverschiebung in Bezug auf das dritte Trägersignal (s_c3) aufweist, und wobei das vierte Steuersignal (s_ctrl4) eine vorbestimmte vierte Phasenverschiebung in Bezug auf das dritte Steuersignal (s_ctrl3) aufweist, wobei die dritte Phasenverschiebung vorzugsweise 180 Grad beträgt, und wobei die vierte Phasenverschiebung vorzugsweise gleich Null ist.

6. Vorrichtung (100; 100a; 100b) nach wenigstens einem der vorangehenden Ansprüche, wobei die Auswertungsvorrichtung (130) einen Hüllkurvendemodulator (132) und/oder ein Bandpassfilter (134) und/oder ein Hochpassfilter zur Verarbeitung des ersten Messsignals (s_m1) umfasst, wodurch ein erstes verarbeitetes Signal (s_p1; s_p1') erhalten wird.

7. Vorrichtung (100; 100a; 100b) nach Anspruch 6, wobei die Auswertungsvorrichtung (130) eine Steuerschaltung (136) zum Bereitstellen eines Kompensationssignals (s_comp) umfasst, wobei das Kompensationssignal (s_comp) so bestimmt wird, dass eine Summe aus dem ersten verarbeiteten Signal (s_p1) und dem Kompensationssignal (s_comp) gleich Null ist.

8. Verfahren zum Betreiben einer Vorrichtung (100; 100a; 100b) zum Messen eines physikalischen Parameters, wobei die Vorrichtung (100; 100a, 100b) eine Reihenschaltung (110) aus wenigstens einer ersten elektrischen Impedanz (112) und einer zweiten elektrischen Impedanz (114) umfasst, wobei die erste elektrische Impedanz (112) einen ersten Anschluss (112a) und einen zweiten Anschluss (112b) aufweist, wobei ein Impedanzwert von wenigstens der ersten elektrischen Impedanz (112) von dem physikalischen Parameter abhängt, wobei die zweite elektrische Impedanz (114) einen ersten Anschluss (114a) und einen zweiten Anschluss (114b) aufweist, und wobei der zweite Anschluss (112b) der ersten elektrischen Impedanz (112) mit dem ersten Anschluss (114a) der zweiten elektrischen Impedanz (114) verbunden ist und einen ersten Knoten (N1) bildet, wobei das Verfahren die folgenden Schritte umfasst: Anlegen (200), mittels eines Signalgenerators (120), eines ersten amplitudenmodulierten Signals (s_am1; s_am1') an den ersten Anschluss (112a) der ersten elektrischen Impedanz (112) und eines zweiten amplitudenmodulierten Signals (s_am2; s_am2') an den zweiten Anschluss (114b) der zweiten elektrischen Impedanz (114), Empfangen (210) eines ersten Messsignals (s_m1) von dem ersten Knoten (N1) durch eine Auswertungsvorrichtung (130), und Bestimmen (220) von Informationen über den wenigstens einen physikalischen Parameter in Abhängigkeit von dem ersten Messsignal (s_m1).

9. Verfahren nach Anspruch 8, wobei das erste amplitudenmodulierte Signal (s_am1) und das zweite amplitudenmodulierte Signal (s_am2) die gleiche Trägerfrequenz aufweisen.

10. Verfahren nach wenigstens einem der Ansprüche 8 bis 9, wobei der Signalgenerator (120) selektiv das erste amplitudenmodulierte Signal (s_am1) und das zweite amplitudenmodulierte Signal (s_am2) mit einer vorbestimmten Trägerfrequenz liefert, wobei der Signalgenerator (120) vorzugsweise die Trägerfrequenz wobbelt.

11. Verfahren nach wenigstens einem der Ansprüche 8 bis 10, wobei der Signalgenerator (120) wenigstens vorübergehend das erste amplitudenmodulierte Signal (s_am1) durch Multiplizieren eines ersten Trägersignals (s_c1), das eine oder die Trägerfrequenz aufweist, mit einem periodischen ersten Steuersignal (s_ctrl1) erhält und wenigstens vorübergehend das zweite amplitudenmodulierte Signal (s_am2) durch Multiplizieren eines zweiten Trägersignals (s_c2), das die Trägerfrequenz aufweist, mit einem periodischen zweiten Steuersignal (s_ctrl2) erhält, wobei das zweite Trägersignal (s_c2) eine vorbestimmte erste Phasenverschiebung in Bezug auf das erste Trägersignal (s_c1) aufweist, und wobei das zweite Steuersignal (s_ctrl2) eine vorbestimmte zweite Phasenverschiebung in Bezug auf das erste Steuersignal (s_ctrl1) aufweist, wobei vorzugsweise die erste Phasenverschiebung und/oder die zweite Phasenverschiebung 90 Grad oder ein Vielfaches von 90 Grad beträgt.

12. Verfahren nach wenigstens einem der Ansprüche 8 bis 11, wobei der Signalgenerator (120) wenigstens vorübergehend das erste amplitudenmodulierte Signal (s_am1') durch Addieren eines dritten Trägersignals (s_c3), das eine oder die Trägerfrequenz aufweist, mit einem periodischen dritten Steuersignal (s_ctrl3) erhält und wenigstens vorübergehend das zweite amplitudenmodulierte Signal (s_am2') durch Addieren eines vierten Trägersignals (s_c4), das die Trägerfrequenz aufweist, mit einem periodischen vierten Steuersignal (s_ctrl4) erhält, wobei das vierte Trägersignal (s_c4) eine vorbestimmte dritte Phasenverschiebung in Bezug auf das dritte Trägersignal (s_c3) aufweist, und wobei das vierte Steuersignal (s_ctrl4) eine vorbestimmte vierte Phasenverschiebung in Bezug auf das dritte Steuersignal (s_ctrl3) aufweist, wobei die dritte Phasenverschiebung vorzugsweise 180 Grad beträgt, und wobei die vierte Phasenverschiebung vorzugsweise gleich Null ist.

13. Verfahren nach wenigstens einem der Ansprüche 8 bis 12, wobei die Auswertungsvorrichtung (130) das erste Messsignal (s_m1) mittels eines Hüllkurvendemodulators (132) und/oder eines Bandpassfilters (134) und/oder eines Hochpassfilters (134') verarbeitet, wodurch ein erstes verarbeitetes Signal (s_p1; s_p1') erhalten wird.

14. Verfahren nach Anspruch 13, wobei die Auswertungsvorrichtung (130) mittels einer Steuerschaltung (136) ein Kompensationssignal (s_comp) bereitstellt, wobei das Kompensationssignal (s_comp) so bestimmt wird, dass eine Summe aus dem ersten verarbeiteten Signal (s_p1) und dem Kompensationssignal (s_comp) gleich Null ist.

15. Verfahren nach wenigstens einem der Ansprüche 8 bis 14, wobei die Schritte des Anlegens (200), des Empfangens (210) und des Bestimmens (220) für eine vorbestimmte Anzahl von Messungen wiederholt werden, wobei für jede der vorbestimmten Anzahl von Messungen eine andere Trägerfrequenz verwendet wird.

## Revendications

1. Appareil (100; 100a; 100b) pour mesurer un paramètre physique, comprenant une connexion en série (110) d'au moins une première impédance électrique (112) et une seconde impédance électrique (114), dans lequel ladite première impédance électrique (112) a une première borne (112a) et une seconde borne (112b), dans lequel une valeur d'impédance d'au moins ladite première impédance électrique (112) dépend dudit paramètre physique, dans lequel ladite seconde impédance électrique (114) a une première borne (114a) et une seconde borne (114b), et dans lequel ladite seconde borne (112b) de ladite première impédance électrique (112) est connectée à ladite première borne (114a) de ladite seconde impédance électrique (114) en formant un premier nœud (N1), dans lequel ledit appareil (100; 100a; 100b) comprend en outre un générateur de signal (120) configuré pour appliquer un premier signal modulé en amplitude (s_am1; s_am1') à ladite première borne (112a) de ladite première impédance électrique (112) et un second signal modulé en amplitude (s_am2; s_am2') à ladite seconde borne (114b) de ladite impédance électrique (114), ledit appareil (100; 100a; 100b) comprenant en outre un dispositif d'évaluation (130) configuré pour recevoir un premier signal de mesure (s_m1; s_m1') provenant dudit premier nœud (N1) et pour déterminer des informations sur ledit au moins un paramètre physique en fonction dudit premier signal de mesure (s_m1; s_ml').

2. Appareil (100; 100a; 100b) selon la revendication 1, dans lequel le premier signal modulé en amplitude (s_am1) et le second signal modulé en amplitude (s_am2) comprennent la même fréquence de porteuse.

3. Appareil (100; 100a; 100b) selon au moins l'une des revendications précédentes, dans lequel le générateur de signal (120) est configuré pour fournir sélectivement le premier signal modulé en amplitude (s_am1) et le second signal modulé en amplitude (s_am2) avec une fréquence de porteuse prédéterminée, dans lequel de préférence le générateur de signal (120) est configuré pour balayer la fréquence de porteuse.

4. Appareil (100; 100a; 100b) selon au moins l'une des revendications précédentes, dans lequel ledit générateur de signal (120) est configuré pour obtenir au moins temporairement ledit premier signal modulé en amplitude (s_am1) en multipliant un premier signal de porteuse (s_cl) ayant une ou ladite fréquence de porteuse avec un premier signal de commande périodique (s_ctrl1) et/ou pour obtenir au moins temporairement ledit second signal modulé en amplitude (s_am2) en multipliant un deuxième signal de porteuse (s_c2) ayant ladite fréquence de porteuse avec un deuxième signal de commande périodique (s_ctrl2), dans lequel ledit deuxième signal de porteuse (s_c2) a un premier déphasage prédéterminé par rapport audit premier signal de porteuse (s_c1), et dans lequel ledit deuxième signal de commande (s_ctrl2) a un deuxième déphasage prédéterminé par rapport audit premier signal de commande (s_ctrl1), dans lequel de préférence ledit premier déphasage et/ou ledit deuxième déphasage est 90 degrés ou un multiple de 90 degrés.

5. Appareil (100; 100a; 100b) selon au moins l'une des revendications précédentes, dans lequel ledit générateur de signal (120) est configuré pour obtenir au moins temporairement ledit premier signal modulé en amplitude (s_am1') en ajoutant un troisième signal de porteuse (s_c3) ayant une ou ladite fréquence de porteuse avec un troisième signal de commande périodique (s_ctrl3) et pour obtenir au moins temporairement ledit second signal modulé en amplitude (s_am2') en ajoutant un quatrième signal de porteuse (s_c4) ayant ladite fréquence de porteuse avec un quatrième signal de commande périodique (s_ctrl4), dans lequel ledit quatrième signal de porteuse (s_c4) a un troisième déphasage prédéterminé par rapport audit troisième signal de porteuse (s_c3), et dans lequel ledit quatrième signal de commande (s_ctrl4) a un quatrième déphasage prédéterminé par rapport audit troisième signal de commande (s_ctrl3), dans lequel de préférence ledit troisième déphasage est de 180 degrés, et dans lequel de préférence ledit quatrième déphasage est nul.

6. Appareil (100; 100a; 100b) selon au moins l'une des revendications précédentes, dans lequel ledit dispositif d'évaluation (130) comprend un démodulateur d'enveloppe (132) et/ou un filtre passe-bande (134) et/ou un filtre passe-haut pour traiter ledit premier signal de mesure (s_ml), de telle sorte qu'un premier signal traité (s_p1; s_p1') est obtenu.

7. Appareil (100; 100a; 100b) selon la revendication 6, dans lequel ledit dispositif d'évaluation (130) comprend un circuit de commande (136) pour fournir un signal de compensation (s_comp), dans lequel ledit signal de compensation (s_comp) est déterminé de telle sorte qu'une somme dudit premier signal traité (s_p1) et dudit signal de compensation (s_comp) est nulle.

8. Procédé de fonctionnement d'un appareil (100; 100a; 100b) pour mesurer un paramètre physique, ledit appareil (100; 100a; 100b) comprenant une connexion en série (110) d'au moins une première impédance électrique (112) et une seconde impédance électrique (114), dans lequel ladite première impédance électrique (112) a une première borne (112a) et une seconde borne (112b), dans laquelle une valeur d'impédance d'au moins ladite première impédance électrique (112) dépend dudit paramètre physique, dans lequel ladite seconde impédance électrique (114) a une première borne (114a) et une seconde borne (114b), et dans lequel ladite seconde borne (112b) de ladite première impédance électrique (112) est connecté à ladite première borne (114a) de ladite seconde impédance électrique (114) en formant un premier nœud (N1), dans lequel ledit procédé comprend les étapes suivantes consistant à: appliquer (200), au moyen d'un générateur de signal (120), une première amplitude signal modulé (s_am1; s_am1') à ladite première borne (112a) de ladite première impédance électrique (112) et un second signal modulé en amplitude (s_am2; s_am2') à ladite seconde borne (114b) de ladite seconde impédance électrique (114), recevoir (210), par l'intermédiaire d'un dispositif d'évaluation (130), un premier signal de mesure (s_m1) provenant dudit premier nœud (N1), et déterminer (220) des informations sur ledit au moins un paramètre physique en fonction dudit premier signal de mesure (s_m1).

9. Procédé selon la revendication 8, dans lequel le premier signal modulé en amplitude (s_am1) et le second signal modulé en amplitude (s_am2) comprennent la même fréquence de porteuse.

10. Procédé selon au moins l'une des revendications 8 à 9, dans lequel le générateur de signal (120) fournit sélectivement le premier signal modulé en amplitude (s_am1) et le second signal modulé en amplitude (s_am2) avec une fréquence de porteuse prédéterminée, dans lequel de préférence le générateur de signal (120) balaie la fréquence de porteuse.

11. Procédé selon au moins l'une des revendications 8 à 10, dans lequel ledit générateur de signal (120) obtient au moins temporairement ledit premier signal modulé en amplitude (s_am1) en multipliant un premier signal de porteuse (s_c1) ayant une ou ladite fréquence de porteuse par un premier signal de commande périodique (s_ctrl1) et obtient au moins temporairement ledit second signal modulé en amplitude (s_am2) en multipliant un deuxième signal de porteuse (s_c2) ayant ladite fréquence de porteuse par un deuxième signal de commande périodique (s_ctrl2), dans lequel ledit deuxième signal de porteuse (s_c2) a un premier déphasage prédéterminé par rapport audit premier signal de porteuse (s_c1), et dans lequel ledit deuxième signal de commande (s_ctrl2) a un deuxième déphasage prédéterminé par rapport audit premier signal de commande (s_ctrl1), dans lequel de préférence ledit premier décalage et/ou ledit second déphasage est de 90 degrés ou un multiple de 90 degrés.

12. Procédé selon au moins l'une des revendications 8 à 11, dans lequel ledit générateur de signal (120) obtient au moins temporairement ledit premier signal modulé en amplitude (s_am1') en ajoutant un troisième signal de porteuse (s_c3) ayant une ou ladite fréquence de porteuse avec un troisième signal de commande périodique (s_ctrl3) et obtient au moins temporairement ledit second signal modulé en amplitude (s_am2') en ajoutant un quatrième signal de porteuse (s_c4) ayant ladite fréquence de porteuse avec un quatrième signal de commande périodique (s_ctrl4), dans lequel ledit quatrième signal de porteuse (s_c4) a un troisième déphasage prédéterminé par rapport audit troisième signal de porteuse (s_c3), et dans lequel ledit quatrième signal de commande (s_ctrl4) a un quatrième déphasage prédéterminé par rapport audit troisième signal de commande (s_ctrl3), dans lequel de préférence ledit le troisième déphasage est de 180 degrés, et dans lequel de préférence ledit quatrième déphasage est nul.

13. Procédé selon au moins l'une des revendications 8 à 12, dans lequel ledit dispositif d'évaluation (130) traite ledit premier signal de mesure (s_m1) au moyen d'un démodulateur d'enveloppe (132) et/ou d'un filtre passe-bande (134) et/ou d'un filtre passe-haut (134'), de telle sorte qu'un premier signal traité (s_p1; s_p1') est obtenu.

14. Procédé selon la revendication 13, dans lequel ledit dispositif d'évaluation (130) fournit, au moyen d'un circuit de commande (136), un signal de compensation (s_comp), dans lequel ledit signal de compensation (s_comp) est déterminé de telle sorte qu'une somme dudit premier signal traité (s_p1) et dudit signal de compensation (s_comp) est nulle.

15. Procédé selon au moins l'une des revendications 8 à 14, dans lequel lesdites étapes d'application (200), de réception (210) et de détermination (220) sont répétées pour un nombre prédéterminé de mesures, dans lequel pour chacune dudit nombre prédéterminé de mesures, une fréquence de porteuse différente est utilisée.
